# EUROPEAN PATENT SPECIFICATION

(11) **EP 0 632 420 B1**
(45) Date of publication and mention of the grant of the patent: **25.10.2000**
(21) Application number: 94110129.7
(22) Date of filing: 29.06.1994
(51) Int. Cl.: G08G 1/127, B61L 25/02, G07B 15/00, G06K 7/10, G07C 9/00

(54) **Moving body discriminator**
Diskriminator von sich bewegenden Körpern
Discriminateur de corps en mouvement

(30) Priority: 30.06.1993 JP 16139093
(43) Date of publication of application: 04.01.1995
(73) Proprietor: SHARP KABUSHIKI KAISHA, Osaka-shi, Osaka-fu 545-0013 (JP)
(72) Inventor: Gotoh, Tadaomi, Osaka-shi, Osaka-fu (JP); Imada, Munetoshi, Yamato-Koriyama-shi, Nara-ken (JP); Inoue, Takahide, Yamato-Koriyama-shi, Nara-ken (JP)
(74) Representative: Müller, Frithjof E., Dipl.-Ing.

(56) References cited:
- EP-A- 0 043 572
- EP-A- 0 158 228
- US-A- 4 495 496
- PATENT ABSTRACTS OF JAPAN vol. 013, no. 453 (E-831), 11 October 1989 & JP-A-01 176126 (SONY CORP), 12 July 1989,
- PATENT ABSTRACTS OF JAPAN vol. 017, no. 316 (M-1430), 16 June 1993 & JP-A-05 032166 (NIPPON SIGNAL CO LTD:THE), 9 February 1993,

## Description

The present invention relates to a moving body discriminator using a moving body discriminating controller and a question antenna.

### Description of the Related Art

In a general moving body discriminator, a plurality of controllers (question antennas) are connected to one data processor. This moving body discriminator uses a so-called center polling system.

In the general moving body discriminator, the plural controllers are connected to the data processor through a serial network of a bus form (a serial channel in the center polling system). A station number is set in advance in each of the controllers. The data processor mainly transmits signals on lines. Commands for executing communication between a controller of a station number 1 and a responder are transmitted from the data processor to this controller of station number 1.

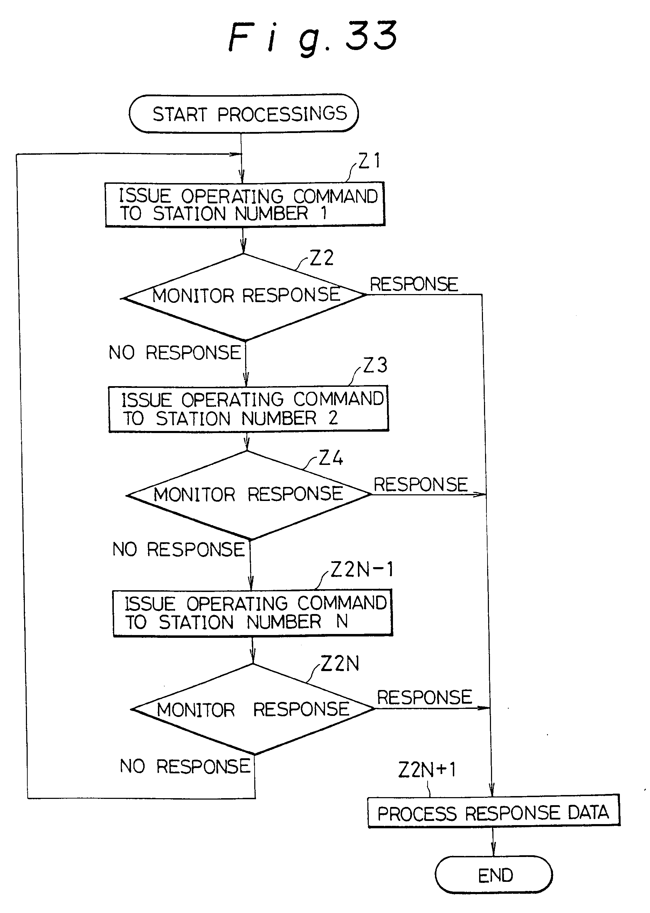

Processings of the data processor in the above general discriminator will next be explained with reference to a flow chart shown in Fig. 33.

In a first step Z1, a controller of a station number 1 operates a question antenna connected to its own station to communicate with a responder. Subsequently, in a step Z2, it is monitored by a predetermined number of retries whether a response from the responder is obtained or not.

In the above step Z2, when no response from the responder is obtained by a predetermined number of retries, the controller of station number 1 transmits a message of "no response from the responder is obtained" to the data processor. Otherwise, the data processor detects that there is no response from this controller within a predetermined time, and transmits commands for communicating with the responder to a controller of a station number 2 in a step Z3.

Similarly, controllers of station numbers 2 to N are sequentially polled by the data processor in steps Z4 to Z2N. In a step Z2N+1, a controller succeeding in communicating with the responder transmits communicating results between this controller and the responder to the data processor.

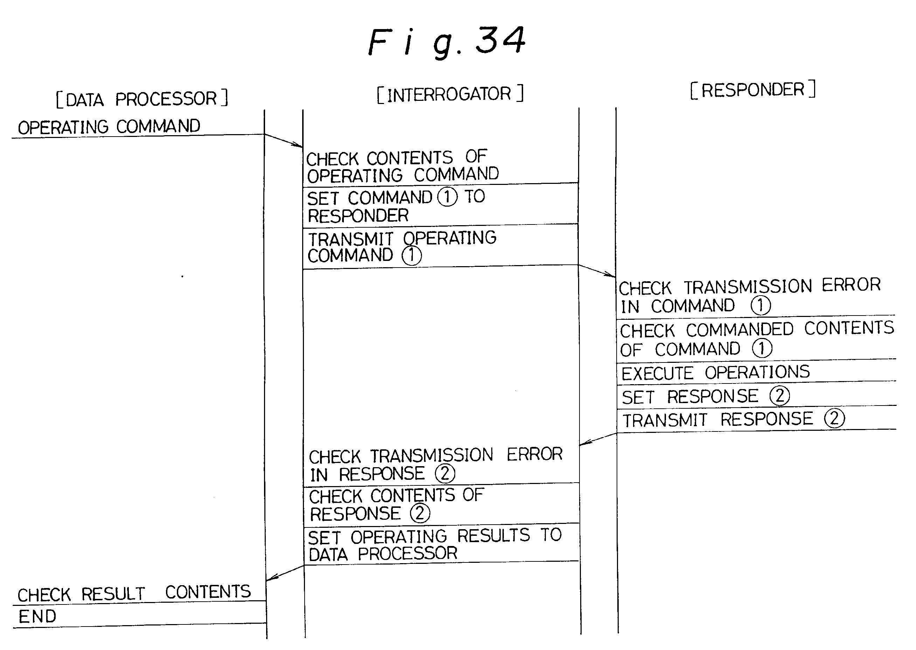

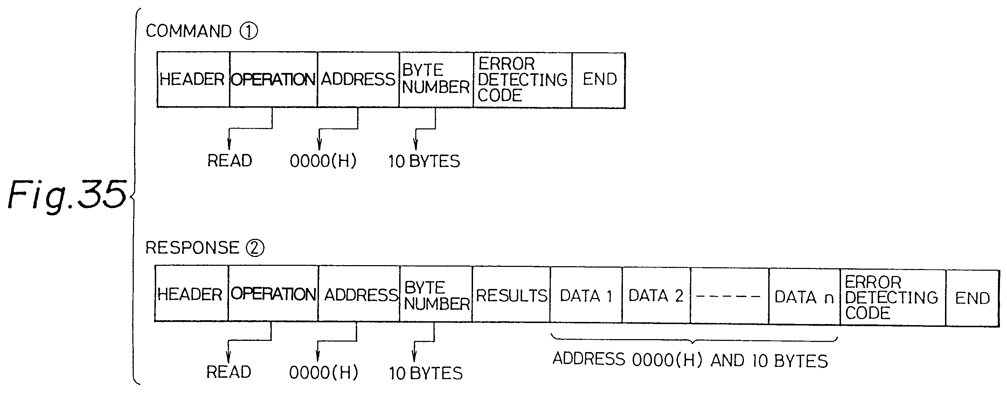

The above processings will next be explained with reference to Figs. 34 and 35.

An interrogator used in the above general moving body discriminator sets an operating code for each of reading and writing and an operating range, etc. of a command ① for commanding an operation of the responder by operational commands from the data processor such as a personal computer, a programmable controller, etc. The interrogator then transmits this command ① to the responder.

When the responder has received the command ①, the responder checks whether there is a transmission error in command ① and also checks command contents such as the operating code and the operating range, etc. Thereafter, the responder executes a responding operation thereof.

After the responding operation, the responder transmits an operating response ② setting operational results thereto to the interrogator. When the interrogator has received the operating response ②, the interrogator checks a transmission error in response ② and contents of this response. Thereafter, the interrogator transfers checking and operating results to the data processor so that a series of operations is terminated. These operations constitute a basic operation of the moving body discriminator.

The following explanation relates to an example in which data of 10 bytes are read from an address 0000(H) in a data region of the responder.

The data processor gives commands to the interrogator such that data of 10 bytes are read from an address 0000(H) in a data region of the responder.

The interrogator receiving these commands checks operating contents of these commands. Thereafter, the interrogator transmits a command ① for commanding an operation of the responder to this responder. In this command ①, an operating code is set to a reading code and address 0000(H) and 10 bytes are set as an operating range. Further, a transmission error detecting code such as a sum check code, etc. are set in this command ①.

When the responder has received this command ①, the responder checks a transmission error from the transmission error detecting code of the command ①. Further, the responder checks command contents such as the operating code, the operating range, etc.

Thereafter, the transmission error detecting code and data of 10 bytes read from the address 0000(H) in the data region of a random access memory (RAM) of the responder are set to a response ② and are transmitted by the responder.

When the interrogator has received this response ②, the interrogator checks a transmission error in response ② and transfers the read data to the data processor. When the data processor has received these data, a series of reading operations is terminated.

As mentioned above, the interrogator in the general moving body discriminator transmits the operating command ① for reading and writing operations, etc. to the responder by operational commands from the data processor such as a personal computer, a programmable controller, etc.

An operating mode of the responder is set to a power save mode to restrain power consumption of a battery at a non-transmitting time of data. The operating mode of the responder is changed to an active mode when the responder receives the operating command ① from the interrogator. The responder executes operations commanded from the interrogator and transmits the operating response ② as executed results to the interrogator. When the interrogator has received this operating response ②, the interrogator transfers results of this operating response to the data processor. Then, the operating mode of the responder is again set to the power save mode and a series of operations is terminated.

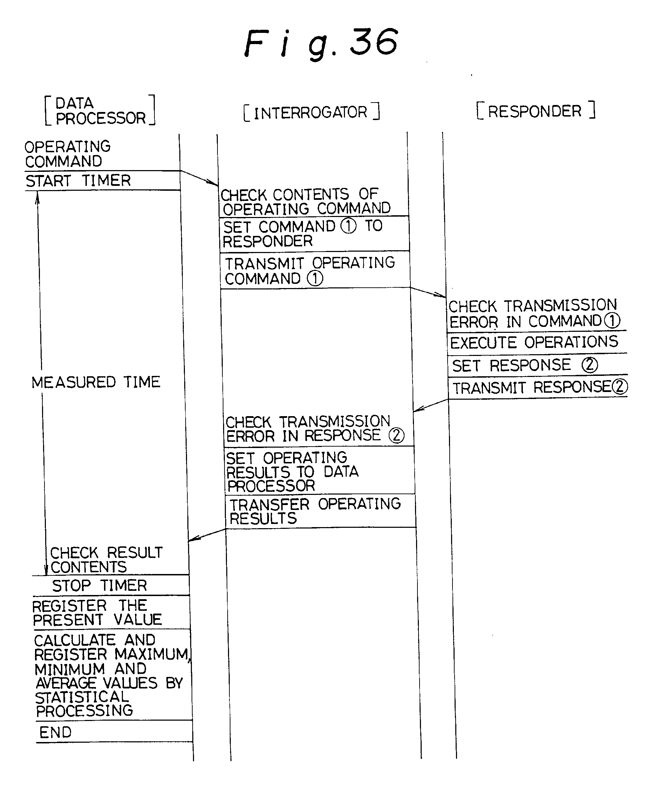

As shown in Fig. 36, the moving body discriminator has a means for confirming a communicating state between the interrogator and the responder. In this confirming means, the data processor measures a time from a commanding time point of operating commands given to the interrogator to a time point at which operating results as a response are transmitted from the interrogator. It is necessary to add a dedicated program to the data processor so as to measure and record this time. This time is recorded to a memory of the data processor and a memory and a printer externally connected to the data processor.

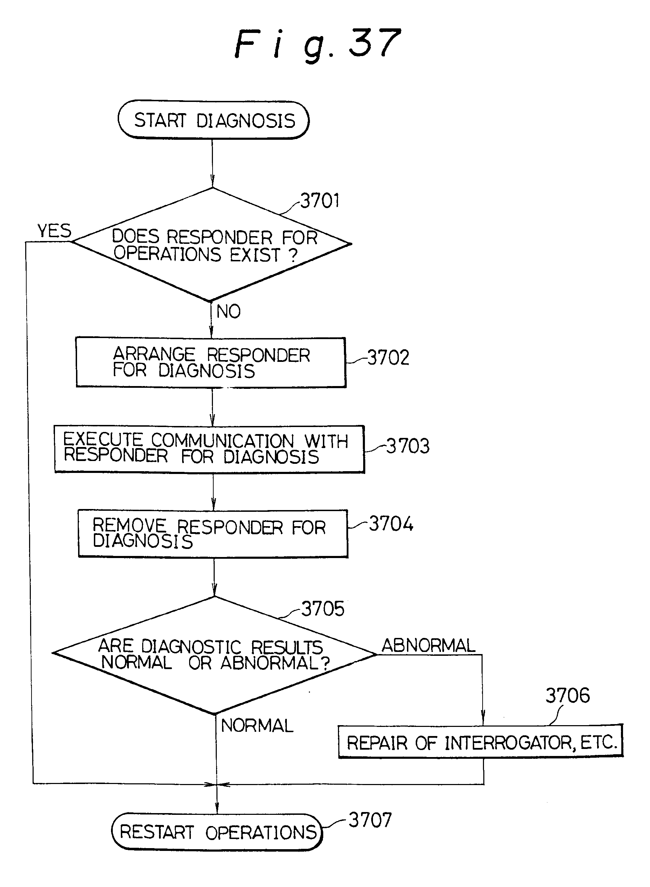

In the general moving body discriminator, a method according to an operating flow as shown in Fig. 37 is used when it is judged whether transmitting and receiving functions of a spatial transmission system of the interrogator are normal or abnormal.

As shown in Fig. 37, it is judged in a step 3701 whether a responder for operations exists or not. When it is judged in the step 3701 that the responder for operations exists, it proceeds to a step 3707 described later. In contrast to this, when it is judged in the step 3701 that no responder for operations exists, a responder for diagnosis is arranged in a step 3702. In a step 3703, communication with the responder for diagnosis is executed. In a step 3704, the responder for diagnosis is removed. In a step 3705, it is judged whether diagnostic results are normal or abnormal. When it is judged in this step 3705 that the diagnostic results are abnormal, repair of the interrogator, etc. are executed in a step 3706. In a step 3707, the operation of the interrogator, etc. are restarted. In contrast to this, when it is judged in the step 3705 that the diagnostic results are normal, it directly proceeds to the above step 3707 and the operation of the interrogator, etc. are restarted.

Namely, the following three operations are performed.
(a) A responder prepared for diagnosis of the interrogator is located within a communication area of the interrogator at a suitable time at which no responder as an object used for an original systematic operation exists in the communication area of the interrogator.
(b) A question signal is emitted from the interrogator.
(c) It is confirmed that a response signal from the responder for diagnosis of the interrogator can be normally received.

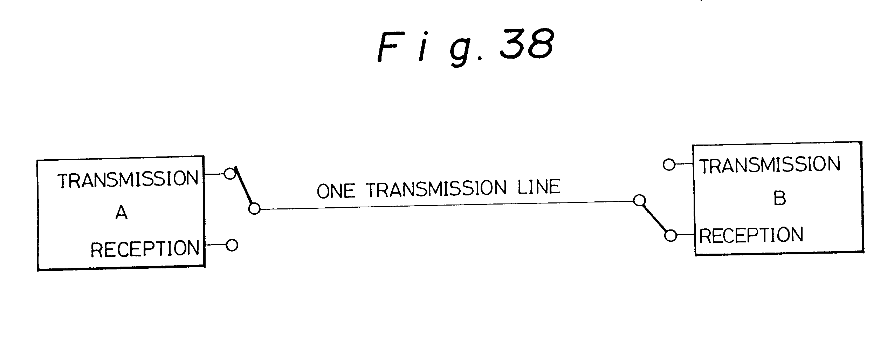

In a general communicating technique, the moving body discriminator performs communication completely according to the form of a half duplex transmission system. The half duplex transmission system is a transmission system using only one transmission line such as a transceiver. Accordingly, in the half duplex transmission system, both devices can have no simultaneous bidirectional communication such as a telephone. Therefore, as shown in Fig. 38, no device B can start signal transmission unless a device A stops signal transmission.

An ID plate is a reflecting type modulator so that a communication form of the ID plate is equal to that of the above half duplex transmission system. Therefore, a so-called time-out system is generally used in the half duplex transmission system.

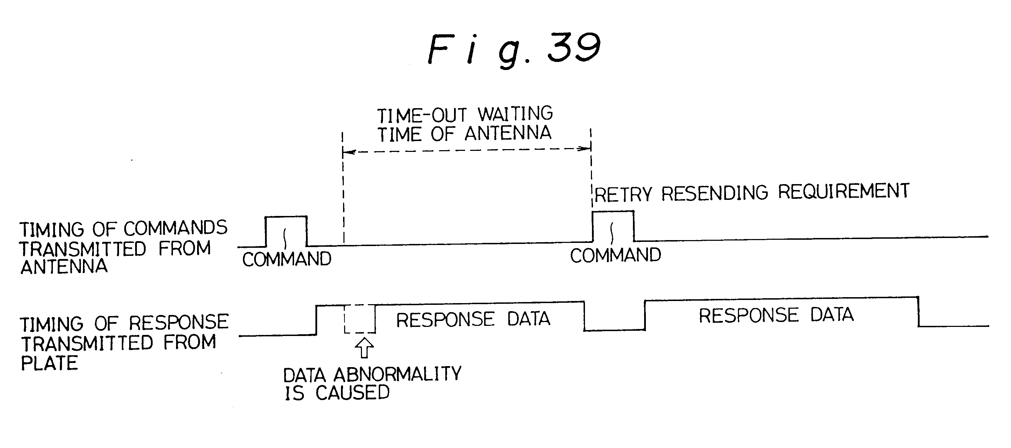

In this time-out system, a maximum time required for data transmissions of the devices A and B shown in Fig. 38 is prescribed in advance. When the data transmission of the device A is started, the device B begins to transmit a data signal to the device A after the prescribed time has passed and the data transmission of the device A has been completely terminated even when data transmitted from the device A are abnormal in its transmitting operation. Concretely, as shown in Fig. 39, an antenna transmits reading commands to the ID plate. When the ID plate has received these commands, the ID plate transmits reading response data to the antenna. However, when the reading response data become abnormal in data transmission of the antenna, the antenna again transmits commands after the prescribed time has passed and the ID plate has completely transmitted the reading response data. Thus, the time-out system prevents a phenomenon of a phase shift in which signal transmissions of the antenna and the ID plate come into collision with each other.

However, in the above general moving body discriminator of the center polling system, it is necessary to sequentially issue operating commands to all controllers connected to the data processor. Therefore, the data processor performs only communication processings with respect to the controllers particularly in a system for detecting time-out by the data processor so that no data processor can perform these communication processings in parallel with other operational processings.

The data processor is interposed at any time to move a token (transmission right) with respect to the responder to the next station in an order of the data processor, the controller of a station number 1, the data processor, the controller of a station number 2, ---. Therefore, it takes time to change stations so that a cyclic time of the token of the question antenna is increased. Accordingly, when a moving speed of the responder is high, undetection of the token is caused.

Further, in the above general moving body discriminator, the data processor and the interrogator fixedly arranged do not generally change operating contents so much between the interrogator and the responder commanded from the data processor when an operating system once rises and is operated. A series of operations between the data processor, the interrogator and the responder is fixed in many cases. However, the interrogator and the responder must execute each of the following items every operation to cope with various applications on a data processing side.

"The interrogator checks command contents such as an operating code, an operating range, etc. from the data processor."

"The interrogator sets operating contents such as the operating code, the operating range, etc. to commands and transmits these commands."

"The responder checks the operating contents of these commands from the interrogator."

"The responder sets the operating contents to a response and transmits this response."

"The interrogator checks the operating contents of the response from the responder."

Accordingly, a processing time for each of the above items is required and the operating contents such as the operating code, the operating range, etc. are included in messages between the interrogator and the responder so that a communication time is increased.

In a method for recording the communication time between the interrogator and the responder in the above general moving body discriminator, it is necessary to make a graph for measuring the communication time by a language such as basic, ladder, etc. used in each of data processors. Therefore, time and cost for developing software, etc. are burdens of a user. In a certain data processor, a unit and an accuracy of a timer for measurement are much greater than those of the communication time so that no data of the timer can be analyzed as the communication time between the interrogator and the responder. Further, a processing time between the data processor and the interrogator is included so that no recorded time can be accurately analyzed in a certain case by communication abnormality between the data processor and the interrogator and dispersion in the processing time.

Furthermore, when data are recorded by externally connecting the operating system to the data processor, an additional space for arranging the operating system is required.

In a diagnostic method of the above general moving body discriminator, when there is a responder used for an original operation of the operating system within a communication area of the interrogator, a question signal is transmitted from the interrogator in a state in which a responder for diagnosis simultaneously exists. In this case, each of these two responders transmits a response signal so that a mixing signal of these two response signals is inputted to a signal receiving circuit of the interrogator. Therefore, no normal communication of the interrogator can be performed so that radio interference is caused. In a diagnostic case, it is necessary to arrange the responder for diagnosis in the communication area of the interrogator so as to avoid this radio interference after it is confirmed that no responder used for the original operation of the operating system exists in the communication area. However, when the general operating system is applied to a toll road charge collecting system and a vehicle operating control system, it is very dangerous to move the responder for diagnosis to the communication area of the interrogator in the intervals of passage of a bicycle and a railway vehicle to which the responder is attached. Accordingly, the interrogator can be diagnosed only when operation of the operating system is stopped. Therefore, a diagnostic period of the interrogator is increased and it is impossible to cope with breakdown and damage of the interrogator caused during the operation of the operating system.

Further, it is dangerous for a man to perform a diagnostic operation of the interrogator and labor cost required for the diagnostic operation is added to cost for the operation of the operating system so that economical efficiency of the operating system is reduced.

In the time-out system used in the above general moving body discriminator, the communication time is sufficiently long in an environment in which the ID plate is at rest before an antenna. Accordingly, no special problem is caused in this environment. However, when the ID plate is moved at a high speed, it is necessary to completely perform the above processings for a very short communication time so that a waiting time for resending commands is useless. Namely, the antenna waits for resending of commands until the ID plate completely transmits response data. As a result, a time required for communication is lengthened so that the ID plate is dislocated from a communication range of the antenna before a predetermined communicating operation is completely performed.

Further, no packet length from the ID plate can be increased. Namely, when the ID plate transmits long response data, the receiving antenna must wait for completion of the transmission of the long response data even when the receiving antenna finds abnormality in a beginning portion of the long response data. Accordingly, the communication time at a retrying time is very lengthened.

In addition, document US-A-4 495 496 discloses a personnel monitoring and locating system for monitoring and/or locating objects such as underground miners. Within a remote terminal, a transceiver unit is provided including a transmitter and receiver control logic, the output of which is coupled through a transmitter amplifier to an antenna from which the transmitted signal is radiated to transponders. Reply signals from the transponders are received at the antenna and coupled to a receiver which is connected with the transmitter and receiver control logic unit. The remote terminal is able to communicate with a host computer and vice versa.

### SUMMARY OF THE INVENTION

It is therefore an object of the invention to provide a moving body discriminator in which a data processor can be simply connected to a plurality of controllers and a processing burden of the data processor can be reduced, and a token cyclic period of an antenna can be shortened.

According to the invention, this object is accomplished by a moving body discriminator as defined in claim 1.

Advantageous further developments of the invention are subject of the accompanying dependent claims.

To be more specific, in the moving body discriminator of the present invention, the data processing means outputs a communication command. Each of the plural control means is connected to the data processing means and inputs the communication command outputted from the data processing means and outputs a predetermined instruction. The plural control means control operations of the plural antennas such that the plural control means sequentially operate the plural antennas in a predetermined order to communicate with the responding means. The plural antennas are connected to the plural control means and correspond to the plural control means and inputs and outputs the predetermined instruction outputted from each of the corresponding control means. The responding means inputs the predetermined instruction by spatial transmission and outputs a specified signal to an antenna outputting the predetermined instruction. Accordingly, connection between the data processing means and the plural control means can be simplified. A processing burden of the data processing means can be reduced. Further, a token cyclic period of the antennas can be shortened. As a result, generating probability of undetection of a token is reduced when the responding means is moved at a high speed.

In the moving body discriminator, the data processing means registers operating contents commanded to the antennas to the antennas and the responding means in advance. A series of operations between the data processing means, the antennas and the responding means is executed by a register number on a side of the responding means. Accordingly, it is possible to reduce a processing time for checking the operating contents and a message length between each of the antennas and the responding means. As a result, an entire operating time of the operating system can be shortened.

In the moving body discriminator, each of the antennas measures a communication time from reception of an operating command from the data processing means to reception of a response from the responding means. Each of the antennas statistically processes maximum, minimum and average values of the measured communication time. Each of the antennas records the present, maximum, minimum and average values of the communication time calculated in its measurement and statistical processing and confirms an operating state of an operating system. Accordingly, operating stability of the operating system can be confirmed from the present, maximum, minimum and average values of the communication time after a communicating equipment is operated.

In the moving body discriminator, the responding means registering an ID code determined for diagnosis thereto is constantly arranged in a communication area of the antennas. Each of the antennas issues an operating command adding a discriminating code thereto at an arbitrary time point during the operation of an operating system so as to diagnose signal transmitting and receiving functions of each of the antennas. The discriminating code designates an operating mode in which the responding means having an ID code conforming to the ID code determined for diagnosis transmits a response. Accordingly, no man is required for execution of the diagnostic operation and the diagnostic operation can be performed at an arbitrary time point during the operation of the operating system. Further, the diagnostic operation can be performed for a short period.

In the moving body discriminator, the responding means responsive to only a diagnostic command is constantly arranged in a communication area of the antennas. Each of the antennas issues the diagnostic command at an arbitrary time point during the operation of an operating system so as to diagnose signal transmitting and receiving functions of each of the antennas. Accordingly, no man is required for execution of the diagnostic operation and the diagnostic operation can be performed at an arbitrary time point during the operation of the operating system. Further, the diagnostic operation can be performed for a short period.

In the moving body discriminator, the circuit plate transmits a resending requirement command when it is judged that response data received by each of the antennas are abnormal. Accordingly, when the circuit plate is transmitting the response data and abnormality is found in data received by each of the antennas, the data transmission of the circuit plate is immediately stopped and the circuit plate can be retried. As a result, the circuit plate can be retried without causing any time loss when abnormality is found in the response data from the circuit plate.

Further objects and advantages of the present invention will be apparent from the following description of the preferred embodiments of the present invention as illustrated in the accompanying drawings.

### BRIEF DESCRIPTION OF THE DRAWINGS

Fig. 1 is a block diagram showing the construction of a moving body discriminator in accordance with a first embodiment of the present invention;
Fig. 2 is a flow chart for explaining data treatment processes of a data processor arranged in the moving body discriminator shown in Fig. 1;
Fig. 3 is an explanatory view showing one example of messages in the moving body discriminator shown in Fig. 1;
Fig. 4 is a block diagram showing one constructional example of a controller arranged in the moving body discriminator shown in Fig. 1;
Fig. 5 is a view for explaining data processings of the moving body discriminator shown in Fig. 1;
Fig. 6 comprising Figs. 6(i) and 6(ii) is a block diagram showing one constructional example of a responder arranged in a moving body discriminator in accordance with a second embodiment of the present invention;
Fig. 7 comprising Figs. 7(i) and 7(ii) is a view for explaining functions of the responder shown in Fig. 6;
Fig. 8 is a view for explaining data processings of the moving body discriminator in the second embodiment of the present invention;
Fig. 9 is a view for explaining another data processing of the moving body discriminator in the second embodiment of the present invention;
Fig. 10 is a view for explaining another processing of the moving body discriminator in the second embodiment of the present invention;
Fig. 11 is a flow chart for explaining the operation of an interrogator shown in Fig. 8;
Fig. 12 is a flow chart for explaining the operation of a responder shown in Fig. 8;
Fig. 13 is a flow chart for explaining the operation of an interrogator shown in Fig. 9;
Fig. 14 is a flow chart for explaining the operation of a responder shown in Fig. 9;
Fig. 15 is a view for explaining one processing example of the responder in the moving body discriminator in the second embodiment;
Fig. 16 is a view for explaining another processing example of the responder in the moving body discriminator in the second embodiment;
Fig. 17 is a view for explaining processings of a moving body discriminator in accordance with a third embodiment of the present invention;
Fig. 18 is a flow chart for explaining an operation of the moving body discriminator in the third embodiment;
Fig. 19 is a view for explaining an operation of the moving body discriminator in the third embodiment;
Fig. 20 is a flow chart for explaining diagnostic processings of an interrogator arranged in a moving body discriminator in accordance with each of fourth and fifth embodiments of the present invention;
Fig. 21 is a flow chart for explaining the operation of a responder arranged in the moving body discriminator in the fourth embodiment of the present invention;
Fig. 22 is a view for explaining a response of the responder to an operating command from the interrogator in the moving body discriminator in the fourth embodiment of the present invention;
Fig. 23 is an explanatory view showing one example of a message for operational designation issued from an interrogator arranged in a moving body discriminator in accordance with a fourth embodiment of the present invention;
Fig. 24 is a view for explaining operational designation in the moving body discriminator in the fourth embodiment of the present invention;
Fig. 25 is a flow chart for explaining the operation of a responder for diagnosis arranged in a moving body discriminator in accordance with a fifth embodiment of the present invention;
Fig. 26 is a flow chart for explaining the operation of a responder for operations arranged in the moving body discriminator in the fifth embodiment of the present invention;
Fig. 27 is a view for explaining operations of the responders with respect to commands from an interrogator arranged in the moving body discriminator in the fifth embodiment of the present invention;
Fig. 28 is an explanatory view showing a diagnostic command issued from the interrogator in the moving body discriminator in the fifth embodiment of the present invention and one example of message forms about various kinds of commands except for the diagnostic command;
Fig. 29 is a view for explaining a method for alternately issuing the diagnostic command and the various kinds of commands in the moving body discriminator in the fifth embodiment of the present invention;
Fig. 30 is a block diagram showing the construction of a circuit plate as a main portion of a moving body discriminator in accordance with a sixth embodiment of the present invention;
Fig. 31 is a circuit diagram showing one constructional example of a preamble detecting section of the circuit plate shown in Fig. 30;
Fig. 32 is a view for explaining an operation of the circuit plate shown in Fig. 30;
Fig. 33 is a flow chart for explaining one operation of a general moving body discriminator;
Fig. 34 is a view for explaining the operation of the general moving body discriminator;
Fig. 35 is a view for explaining another operation of the general moving body discriminator;
Fig. 36 is an explanatory view of an operation for confirming a communication state between an interrogator and a responder arranged in the general moving body discriminator;
Fig. 37 is a flow chart for explaining judgment of normality and abnormality in signal transmitting and receiving functions of the interrogator in the general moving body discriminator;
Fig. 38 is one view for explaining a half duplex transmission system in the general moving body discriminator; and
Fig. 39 is another view for explaining the half duplex transmission system in the general moving body discriminator.

### DESCRIPTION OF THE PREFERRED EMBODIMENTS

The preferred embodiments of a moving body discriminator in the present invention will next be described in detail with reference to the accompanying drawings.

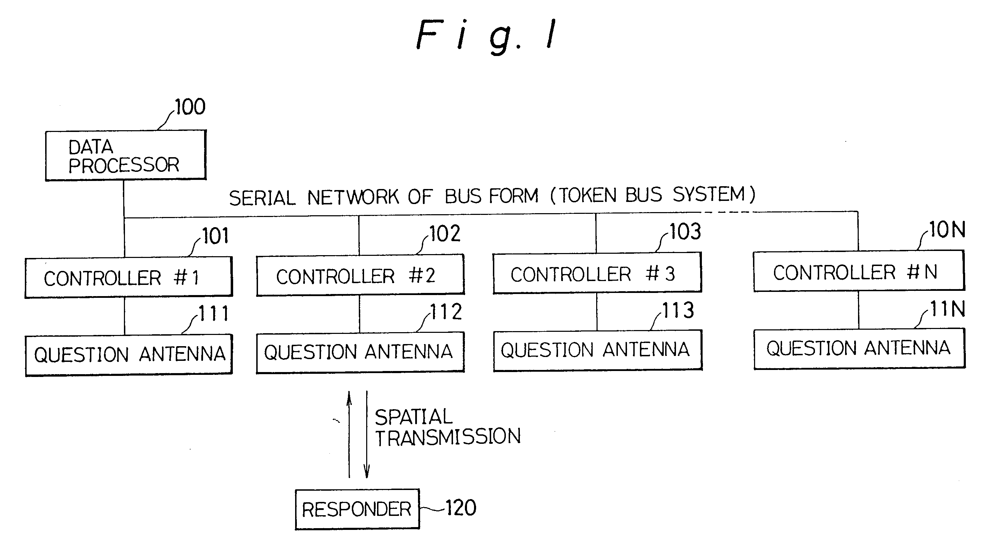

Fig. 1 is a block diagram showing the construction of a moving body discriminator in accordance with a first embodiment of the present invention.

The moving body discriminator shown in Fig. 1 has a data processor 100 as a data processing means for controlling designation of a controller as a control means and giving communication commands to this designated controller. The moving body discriminator also has a plurality of controllers (#1) 101 to (#N) 10N connected to the data processor 100 via a serial token bus system for inputting the communication commands from the data processor 100 when designated and subsequently outputting a predetermined instruction. The moving body discriminator also has a plurality of question antennas 111 to 11N connected and corresponding to the plurality of controllers 101 to 10N for inputting the predetermined instruction from the corresponding one of controllers 101 to 10N and outputting the same for spatial transmission. The moving body discriminator further has a responder 120, which is provided with the moving body to be discriminated, as a responding means for communicating with the question antennas 111 to 11N by spatial transmission.

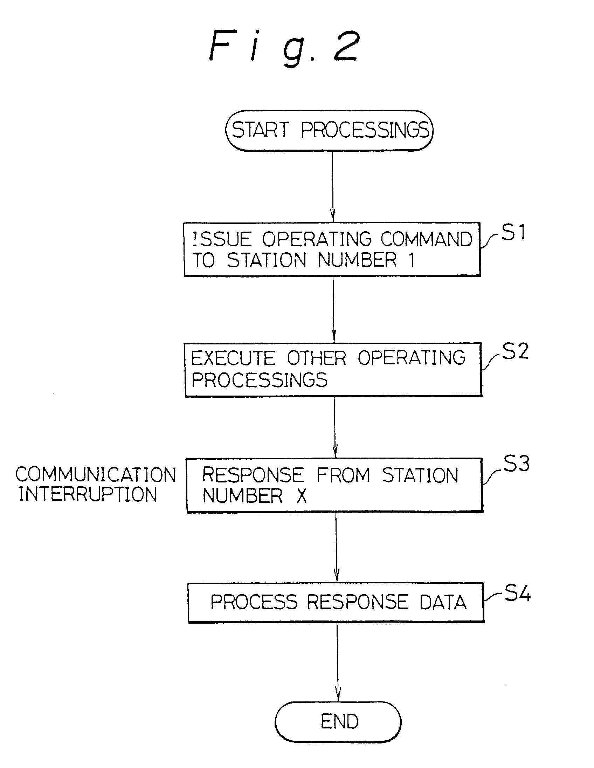

Data treatment processes of the data processor 100 in the moving body discriminator shown in Fig. 1 will next be explained with reference to a flow chart (steps S1 to S4) shown in Fig. 2.

Operating commands are first issued to the controller of a station number 1 in the step S1. In the step S2, other operational processings are executed. In the step S3, the data processor receives a response from the controller of a station number X by communication interruption. In the step S4, the data processor processes response data so that the data treatment processings are terminated.

An operating state of the data processor on a transmission line is normally set to an idle state in which no token exists.

Namely, when communication between the data processor 100 and the responder 120 is required, the data processor 100 acquires a token and designates the controller 101 of a station number 1 on this line in a predetermined message form. The data processor 100 then gives communication commands between the data processor 100 and the responder 120 to this controller 101.

The question antenna 111 connected to the controller 101 of station number 1 starts communication with the responder 120.

An operation of the moving body discriminator in this embodiment will next be explained in the following two cases A and B. In the case A, an antenna receives a response signal from the responder within a predetermined number of retries. In the case B, no antenna can receive a response signal from the responder within a predetermined number of retries.

### (A) The case A in which an antenna receives a response signal from the responder within a predetermined number of retries

In this case, a message of contents according to the response signal from the responder 120 is transmitted onto a serial network. One of the following two items can be selected by this message by using requirements of an operating system.
(1) "A token is moved to the controller of a station number 2."
(2) "The data processor acquires the token and transmits a message in which the token is transferred to the controller of an arbitrary station number in accordance with necessity."

### (B) The case B in which no antenna can receive a response signal from the responder within a predetermined number of retries

In this case, a message of transferring a token to the controller 102 of a station number 2 is transmitted onto a serial network.

Similarly, the token is circulated from the controller 102 to the controller 10N of a final station number N.

When a message of transfer of the token is transmitted from the controller 10N of the final station number N, one of the following two items can be selected by using requirements of the operating system.
(1) "The controller of station number 1 acquires the token."
(2) "The data processor acquires the token and transmits a message in which the token is transferred to the controller of an arbitrary station number in accordance with necessity."

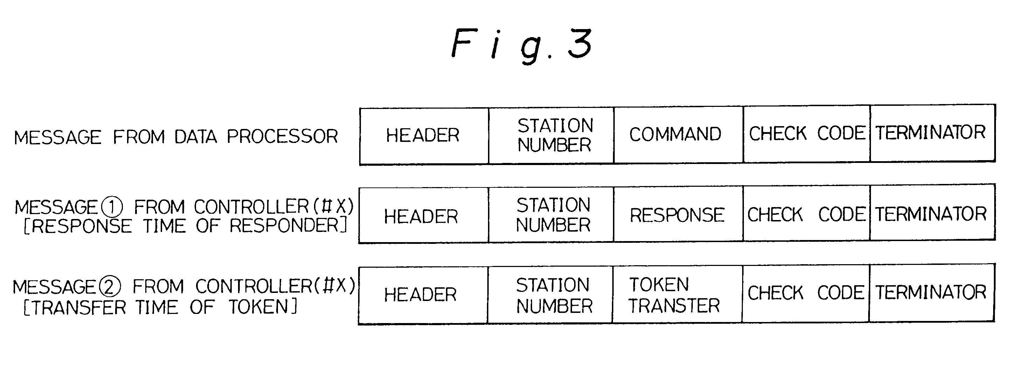

As shown in Fig. 3, the following information are included in a message of the data processor or the controller acquiring the token which is transmitted onto the serial network.

A header shows beginning of the message.

A station number shows a number of an opposite station to which the token is transferred.

Commands show contents of communication with the responder.

A check code is an error check code of the message typically provided by a sum check code and a CRC code.

A terminator shows termination of communication.

Further, in accordance with necessity, the following information may be added to the above message.

A responder ID code shows designation or undesignation of communication with a specified responder.

Writing data show contents written to a memory of the responder.

An address is an address to be read/written to the memory of the responder.

A byte number is a byte number to be read/written to the memory of the responder.

"A response" instead of the above commands is inserted into the message from the controller at a response time of the responder. Further, "token transfer" instead of the above commands is inserted into the message from the controller at a transferring time of the token.

In the moving body discriminator of the present invention, the number of question antennas connected to one controller is not limited to one. The moving body discriminator of the present invention can be also applied to a case in which a plurality of question antennas are connected to one controller. In this case, the controller acquiring the token sequentially operates the plural question antennas connected to its own station so as to avoid a communication obstacle caused by interference between adjacent antennas. When a response is obtained from the responder by any one of the question antennas connected to its own station, a message according to response contents of the responder is transmitted. In contrast to this, when no response is obtained from the responder by any one of the question antennas, a message of transferring the token to the next station is transmitted.

As shown in Fig. 1, the data processor 100 is bus-connected to the plural controllers 101 to 10N through a twist pair cable and a coaxial cable. A typical bus is RS485 using the twist pair cable.

It is necessary to avoid a collision between signals on lines in a bus-connected serial network. In the present invention, this collision is avoided by circulating only one token existing on lines. A transmission system using this method is called a token bus system and is widely used in communication between devices.

Roles of the token will next be explained in the moving body discriminator of the present invention.

In the present invention, the token plays the role of a transmission right on the serial network and also plays the role of a transmission right with respect to spatial transmission between a question antenna and the responder.

When it is necessary to arrange a plurality of question antennas such that these antennas are adjacent to each other, there is a case in which signals are interfered with each other when the adjacent question antennas are simultaneously operated. In another case, no normal communication can be performed in the responder by radio interference of signals from the plural question antennas. However, in the present invention, the transmission right on the spatial transmission is provided to only a question antenna connected to a controller having the transmission right on the serial network so that such communication obstacles are not caused.

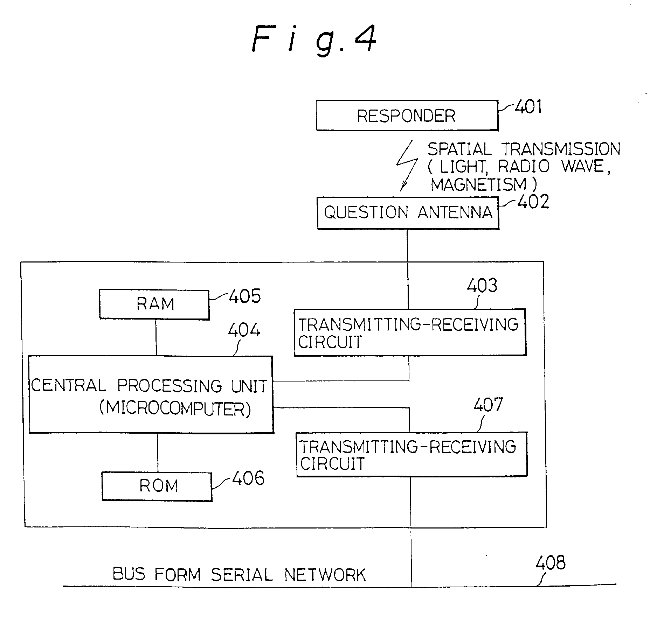

Fig. 4 is a block diagram showing one constructional example of each of the controllers shown in Fig. 1.

A controller shown in Fig. 4 is constructed by a signal transmitting-receiving circuit 403, a central processing unit (microcomputer) 404, a random access memory (RAM) 405, a read only memory (ROM) 406 and a signal transmitting-receiving circuit 407. The signal transmitting-receiving circuit 403 is connected to a question antenna 402 for receiving a signal such as light, a radio wave, electromagnetic coupling (magnetic induction) transmitted from a responder 401 by spatial transmission. The signal transmitting-receiving circuit 403 receives the receiving signal of the question antenna 402. The central processing unit 404 is connected to the signal transmitting-receiving circuit 403 and controls an operation of each of the above constructional portions. The random access memory 405 is connected to the central processing unit 404 and stores processed results, station numbers, etc. based on programs by the central processing unit 404. The read only memory 406 is connected to the central processing unit 404 and stores executed programs, station numbers, etc. by the central processing unit 404. The signal transmitting-receiving circuit 407 is connected to the central processing unit 404 and outputs the processed results stored to the RAM 405 to a bus form serial network 408.

Namely, in the controller shown in Fig. 4, the signal transmitting-receiving circuit 403 is arranged in relation to the question antenna 402 and the signal transmitting-receiving circuit 407 is arranged in relation to the bus form serial network 408. The controller shown in Fig. 4 registers its own station number to a memory element of the RAM 405 or the ROM 406. Otherwise, the controller sets its own station number by a digital switch, etc.

The bus form serial network 408 shown in Fig. 4 may be constructed by using a coaxial cable or EIA RS485 using a twist pair cable.

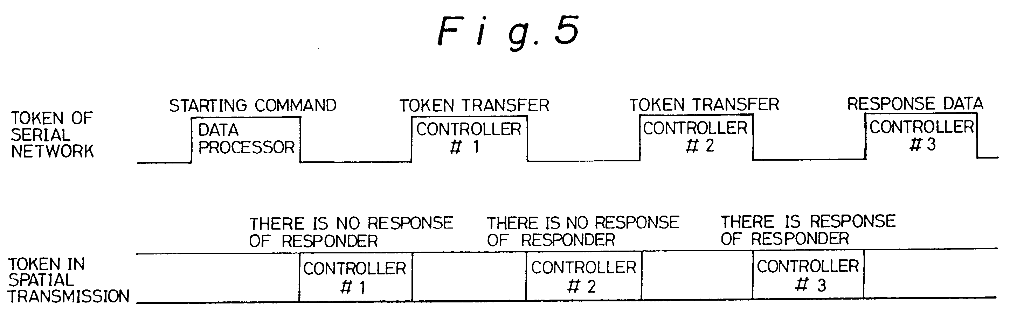

Fig. 5 shows transfer of a token on the serial network and a spatial transmission line (or a spatial channel) in the moving body discriminator shown in Fig. 1.

When communication between the data processor 100 and the responder 120 is required, the data processor 100 issues commands for starting an operation of the controller 101 of station number 1 onto the serial network.

The controller 101 of station number 1 interprets these commands as a message addressed to its own station and starts communication with the responder 120 in accordance with contents of this message.

The controller 101 of station number 1 communicates with the responder 120 within a range of the number of times or a time determined in advance by this controller 101 or designated by the message.

Fig. 5 shows a case in which the controller 101 of station number 1 can obtain no response from the responder 120 within the range of a predetermined number of times or a time. In this case, a message of transferring the token to the controller 102 of a station number 2 is issued from the controller 101 to the serial network. Further, the controller 102 of station number 2 can obtain no response from the responder 120 so that the token is transferred from the controller 102 to the controller 103 of a station number 3 as one example.

The controller 103 of station number 3 obtains the response from the responder 120 within the range of a predetermined number of times or a time. Accordingly, communicated results obtained by communication between the controller 103 and the responder 120 are transmitted from the controller 103 onto the serial network by designating a station number of the data processor 100.

As mentioned above, the moving body discriminator in the present invention is operated as follows.
(1) The data processor and the plural controllers are connected to each other through a bus form serial channel.
(2) A station number is set in advance to each of the controllers.
(3) A message of giving a transmission right (token) with respect to the responder is transmitted from the data processor to the controller of station number 1.
(4) The controller of station number 1 operates a question antenna connected to its own station and executes communication with the responder.
   When no response is obtained from the responder by a predetermined number of retries, the controller of station number 1 transmits a message of transferring the token to the controller of station number 2.
(5) While the token is similarly circulated, a controller succeeding in communication with the responder transmits communicated results between this controller and the responder to the data processor.

In the serial network of a token bus system, a signal collision on the serial network is prevented by sequentially circulating the token (the transmission right) on the serial network. In the present invention, a signal collision in spatial transmission can be avoided by providing the transmission right on the serial network and providing the transmission right with respect to the responder in the moving body discriminator. Further, the plural controllers (question antennas) can be connected to one data processor through one serial port thereof.

In the above embodiment, the following operations a, b and c are performed.

### (a) "Simplification of connection between the data processor and the plural controllers"

In the bus form serial network, the data processor and the controllers can be connected to each other by a multidrop system as a daisy chain system so that a wiring system is simplified.

### (b) "Reduction in processing burden of the data processor"

The token functions as a transmission right on the serial network and also functions as a transmission right with respect to the responder. This token is circulated between the controllers after the token is transmitted to the controller of station number 1. The data processor can execute other processing operations until the data processor receives interruption of communicated results from a controller succeeding in communication with the responder.

### (c) "Shortening of a token cyclic period of the interrogator"

The token is sequentially circulated between the controllers without the data processor. Therefore, a period for obtaining the token by the interrogator is shortened.

Accordingly, generating probability of undetection of the token is reduced when the responder is moved at a high speed.

A moving body discriminator in accordance with a second embodiment of the present invention will next be explained.

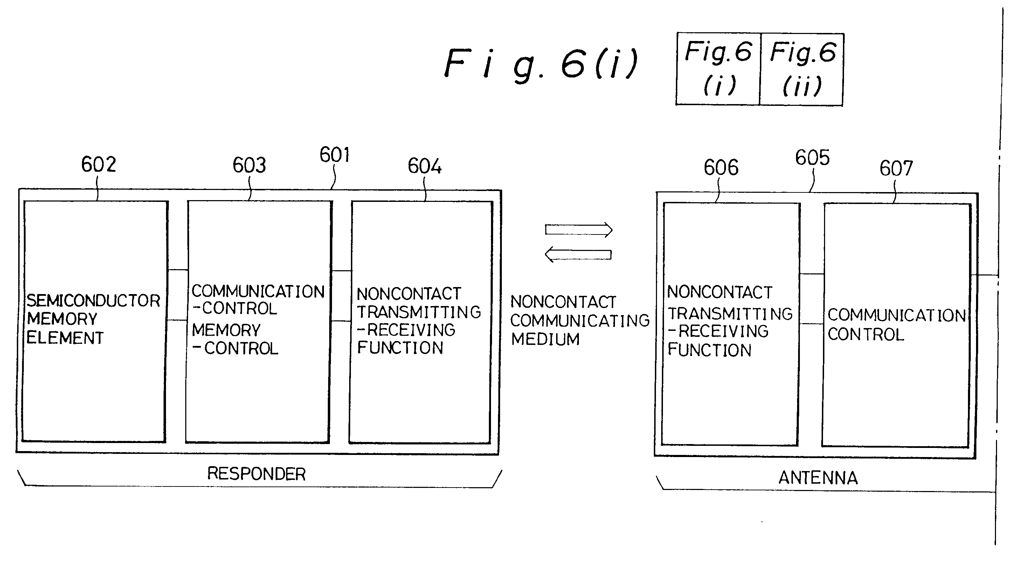

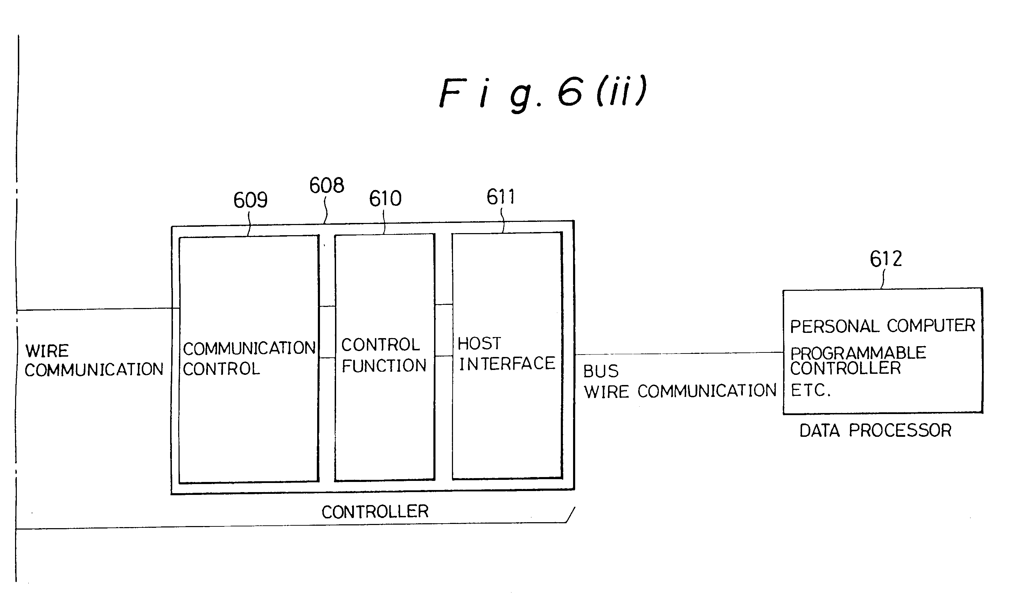

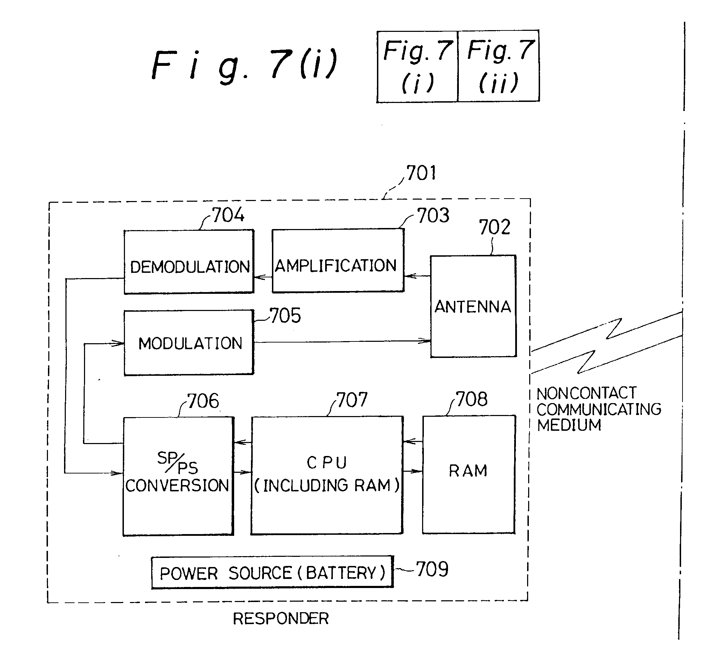

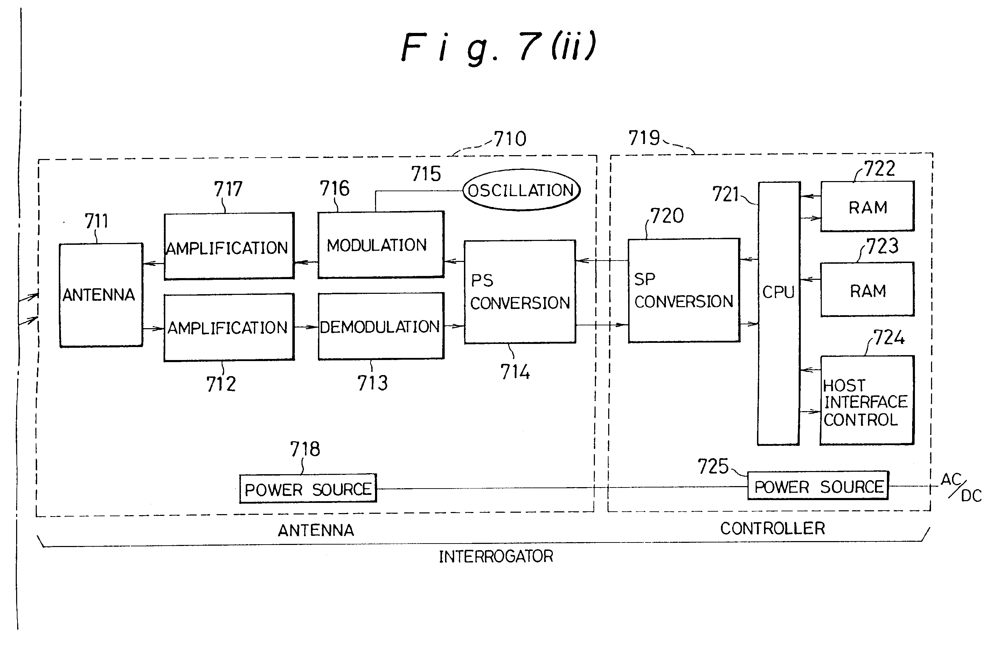

A function and a construction of the moving body discriminator in this second embodiment will first be explained with reference to Figs. 6 and 7.

As shown in Fig. 6, a responder 601 has a semiconductor memory element 602, a communication-control memory-control section 603 and a noncontact transmitting-receiving functional section 604.

A question antenna 605 constitutes one portion of an interrogator communicating with the responder 601 by a noncontact communicating medium. The question antenna 605 has a noncontact transmitting-receiving functional section 606 and a communication control section 607. A controller 608 constitutes another portion of the interrogator and communicates with the question antenna 605 through wires. The controller 608 has a communication control section 609, a control functional section 610 and a host interface 611.

A data processor 612 communicates with the controller 608 through buses and wires. The data processor 612 has functions of a personal computer, a programmable controller, etc.

Fig. 7 shows one example of a hard construction of the moving body discriminator for fulfilling the above functions shown in Fig. 6.

In Fig. 7, a responder 701 is constructed by an antenna 702, an amplifying section 703, a demodulating section 704, a modulating section 705, an SP/PS converting section 706, a CPU 707, a RAM 708 and a power source 709. The amplifying section 703 is connected to the antenna 702 and amplifies one portion of a signal received by the antenna 702. The demodulating section 704 is connected to the amplifying section 703 and demodulates a signal amplified by the amplifying section 703. The modulating section 705 is connected to the antenna 702 and transmits the modulated signal to the antenna 702. The SP/PS converting section 706 is connected to the demodulating section 704 and the modulating section 705 and converts a serial signal to a parallel signal, or converts the parallel signal to the serial signal. The CPU 707 is connected to the SP/PS converting section 706 and includes a ROM. The CPU 707 processes and outputs a signal outputted from the SP/PS converting section 706. The RAM 708 is connected to the CPU 707 and stores the signal processed by the CPU 707. The power source 709 is formed by a battery, etc.

In Fig. 7, a question antenna 710 is constructed by an antenna 711, an amplifying section 712, a demodulating section 713, a PS converting section 714, an oscillating section 715, a modulating section 716, an amplifier 717 and a power source 718. The antenna 711 communicates with the antenna 702 of the responder 701 through a noncontact communicating medium. The amplifying section 712 is connected to the antenna 711 and amplifies a signal inputted to the antenna 711. The demodulating section 713 is connected to the amplifying section 712 and demodulates a signal amplified by the amplifying section 712. The PS converting section 714 is connected to the demodulating section 713 and converts a signal demodulated by the demodulating section 713 from a parallel signal to a serial signal. The oscillating section 715 oscillates a signal. The modulating section 716 is connected to the PS converting section 714 and the oscillating section 715. The modulating section 716 modulates a signal converted by the PS converting section 714 from the parallel signal to the serial signal by oscillating this converted signal using the oscillating section 715. The amplifier 717 is connected to the modulating section 716 and amplifies a signal modulated by the modulating section 716. The power source 718 supplies each of an alternating current and a direct current (AC/DC) to the question antenna 710.

In Fig. 7, a controller 719 is constructed by an SP converting section 720, a CPU 721, a RAM 722, a ROM 723, a host interface control section 724 and a power source 725. The SP converting section 720 is connected to the PS converting section 714 of the question antenna 710 and converts the output signal of the PS converting section 714 from a serial signal to a parallel signal. The CPU 721 is connected to the SP converting section 720 and controls a signal outputted from the SP converting section 720. The RAM 722 is connected to the CPU 721 and stores a signal outputted from the CPU 721. The ROM 723 is connected to the CPU 721 and stores a program used in the CPU 721. The host interface control section 724 is connected to the CPU 721 and controls the operation of an interface based on an operation of the CPU 721. The power source 725 is connected to the power source 718 of the question antenna 710 and supplies each of an alternating current and a direct current (AC/DC) to the controller 719.

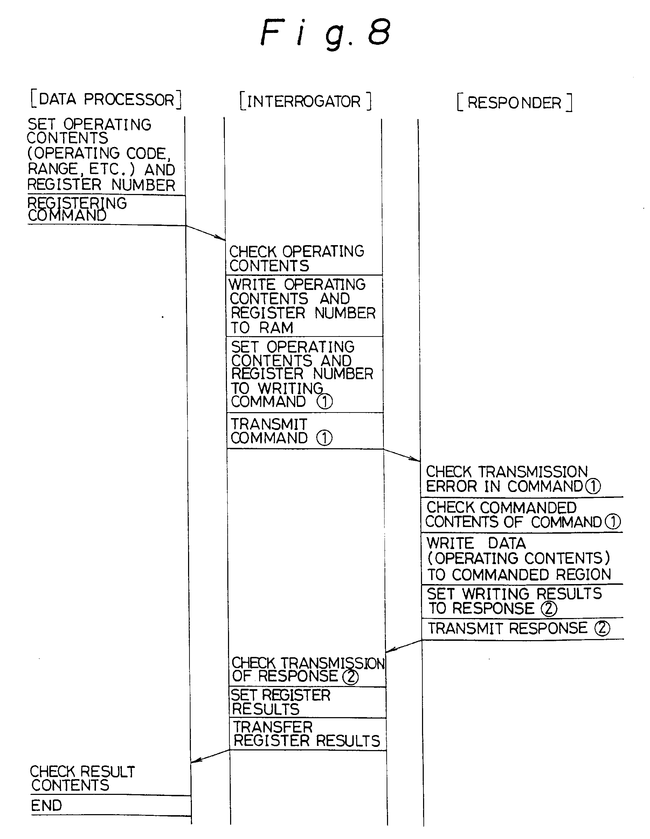

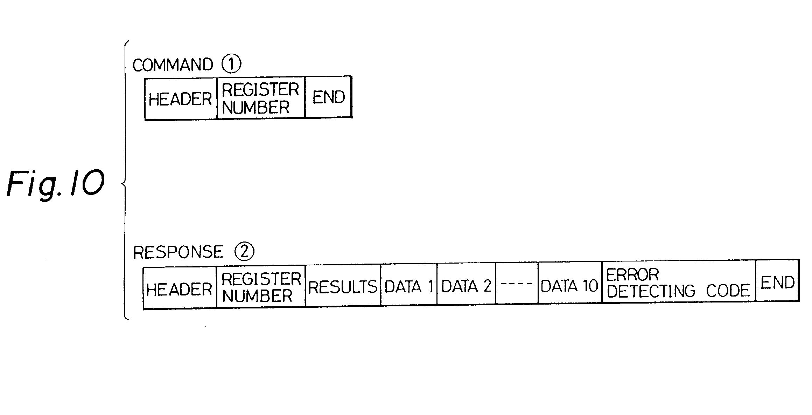

An operation of the moving body discriminator in this embodiment will next be explained with reference to Figs. 8 to 14.

As shown in Figs. 8 to 14, when an interrogator receives a register number as operational commands from a data processor such as a personal computer, a programmable controller, etc., the interrogator sets this register number to an indicating command ① and transmits this command to the responder.

When the responder has received this command ①, the responder reads operating contents such as an operating code from a RAM registered to the register number of the command ①. After this reading operation, the responder sets read results to a response ② and transmits this response to the interrogator.

When the interrogator has received this response ②, the interrogator checks a transmission error in this response. Thereafter, the interrogator transfers checked and operating results to the data processor. When the data processor has received these checked and operating results, a series of operations has terminated.

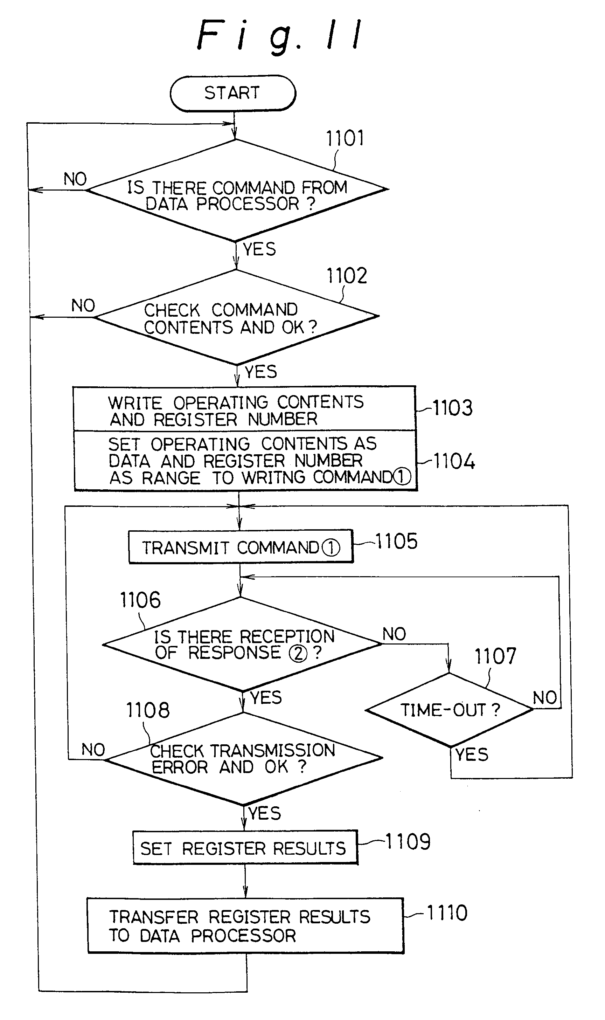

Each of the above processings of the moving body discriminator will next be explained with reference to flow charts shown in Figs. 11 to 14.

Processings of the interrogator shown in Fig. 8 will first be explained with reference to the flow chart shown in Fig. 11.

In a first step 1101, it is judged whether there is a command from the data processor or not. When it is judged in the step 1101 that there is no command from the data processor, the interrogator attains a standby state until the interrogator receives a command from the data processor. In contrast to this, when it is judged in the step 1101 that there is a command from the data processor, the interrogator checks contents of this command in a step 1102 and judges whether these command contents are correct or not. When the command contents are incorrect, it is returned to the above step 1101. In contrast to this, when the command contents are correct in the step 1102, operating contents and a register number are written to the interrogator in a step 1103. The operating contents are set to a writing command ① as data and the register number is set to this writing command ① as a range in a step 1104. The interrogator transmits this writing command ① in a step 1105.

Subsequently, it is judged in a step 1106 whether there is reception of a response ② or not. When it is judged in the step 1106 that there is no reception of the response ②, it is further judged in a step 1107 whether it is time-out or not. When it is judged in the step 1107 that it is time-out, it is returned to the above step 1105. In contrast to this, when it is judged in the step 1107 that it is not time-out, it is returned to the above step 1106.

When it is judged in the step 1106 that there is reception of the response ②, the interrogator checks a transmission error in this response in a step 1108 and judges whether this response is correct or not. When it is judged in the step 1108 that there is a transmission error in the response ②, it is returned to the above step 1105. In contrast to this, when it is judged in the step 1108 that there is no transmission error in the response ②, the interrogator sets registered results in a step 1109 and transfers the registered results to the data processor in a step 1110.

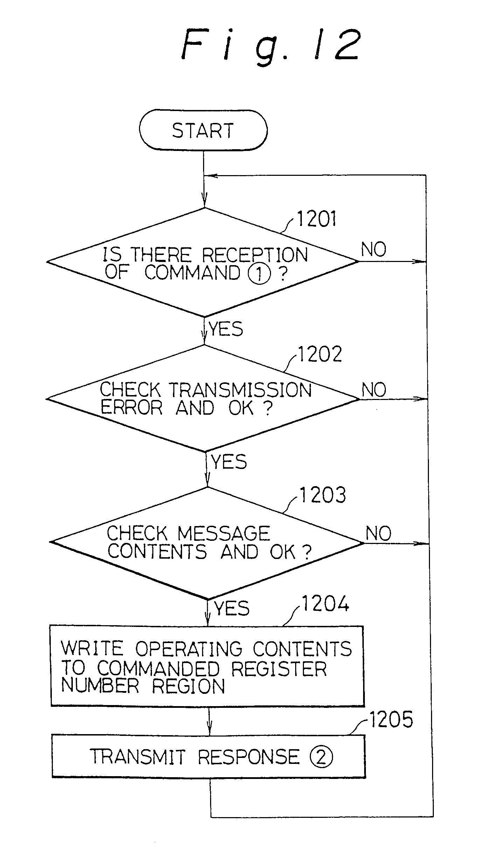

Processings of the responder shown in Fig. 8 will next be explained with reference to the flow chart shown in Fig. 12.

In a first step 1201, it is judged whether there is reception of a command ① or not. When it is judged in the step 1201 that there is no reception of the command ①, the responder attains a standby state until the responder receives the command ①. In contrast to this, when it is judged in the step 1201 that there is reception of the command ①, the responder checks a transmission error in the command ① in a step 1202 and judges whether this command is correct or not. When it is judged in the step 1202 that there is a transmission error in the command ①, it is returned to the above step 1201. In contrast to this, when it is judged in the step 1202 that there is no transmission error in the command ①, the responder checks message contents of this command in a step 1203. When it is judged in the step 1203 that no message contents are good, it is returned to the above step 1201. In contrast to this, when it is judged in the step 1203 that the message contents are good, operating contents are written to a commanded register number region in a step 1204 and the responder transmits a response ② in a step 1205.

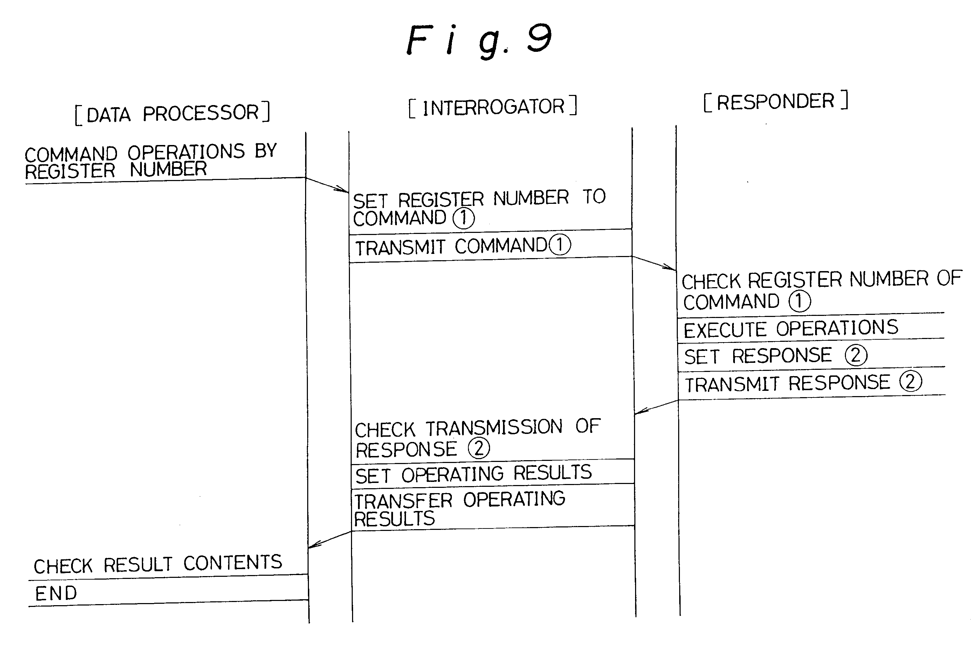

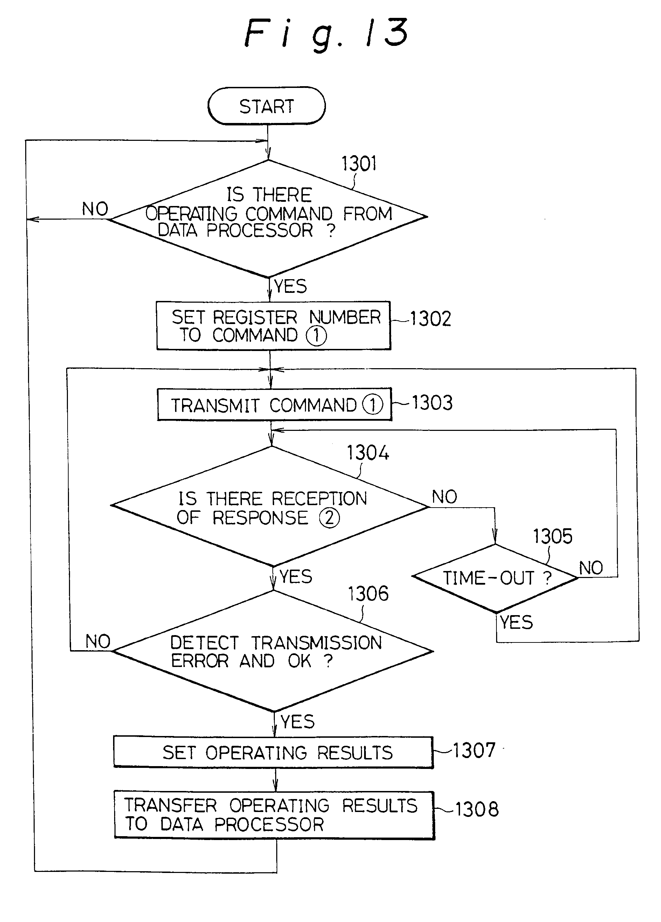

Processings of the interrogator shown in Fig. 9 will next be explained with reference to the flow chart shown in Fig. 13.

In a first step 1301, it is judged whether there is an operating command from the data processor or not. When it is judged in the step 1301 that there is no operating command from the data processor, the interrogator attains a standby state until the interrogator receives an operating command. In contrast to this, when it is judged in the step 1301 that there is an operating command from the data processor, a register number is set to a command ① in a step 1302. In a step 1303, the interrogator transmits this command ①. In a step 1304, it is judged whether there is reception of a response ②. When it is judged in the step 1304 that there is no reception of the response ②, the interrogator judges in a step 1305 whether it is time-out or not. When it is judged in the step 1305 that it is time-out, it is returned to the above step 1303. In contrast to this, when it is judged in the step 1305 that it is not time-out, it is returned to the above step 1304.

When it is judged in the step 1304 that there is reception of the response ②, the interrogator checks a transmission error in the response ② in a step 1306 and judges whether this response is correct or not. When it is judged in the step 1306 that there is a transmission error in the response ②, it is returned to the above step 1303. In contrast to this, when it is judged in the step 1306 that there is no transmission error in the response ②, operating results are set to the interrogator in a step 1307 and are transferred to the data processor in a step 1308.

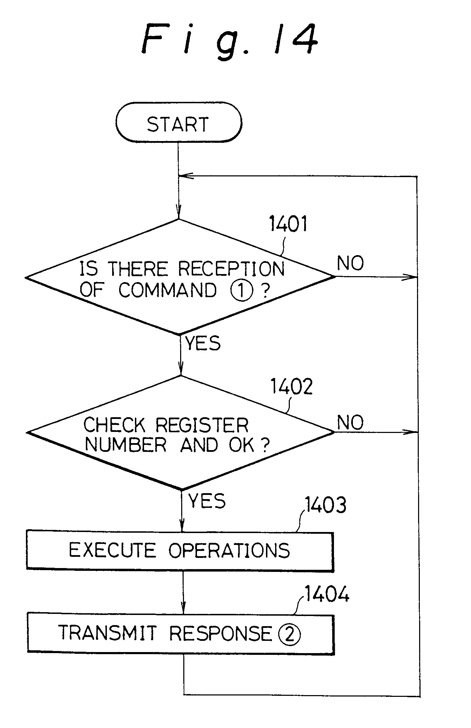

Processings of the responder shown in Fig. 9 will next be explained with reference to the flow chart shown in Fig. 14.

In a first step 1401, it is judged whether there is reception of a command ① or not. When it is judged in the step 1401 that there is no reception of the command ①, the responder attains a standby state until the responder receives the command ①. In contrast to this, when it is judged in the step 1401 that there is reception of the command ①, the responder checks a register number in a step 1402 and judges whether the register number is correct or not. When it is judged in the step 1402 that no register number is good, it is returned to the above step 1401. In contrast to this, when it is judged in the step 1402 that the register number is good, an operation of the responder is executed in a step 1403 and the responder transmits a response ② in a step 1404.

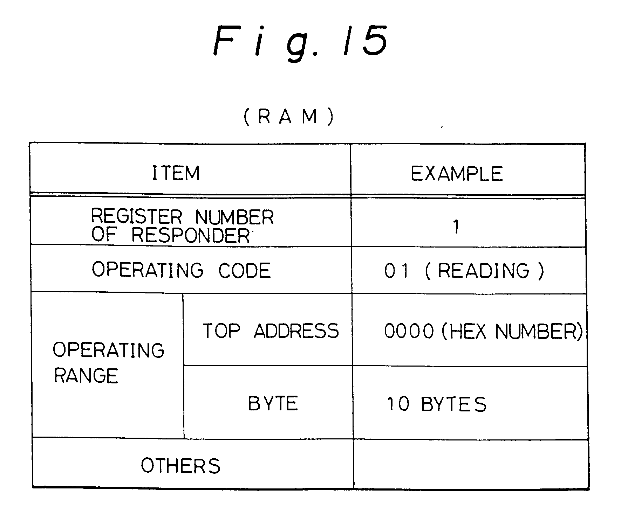

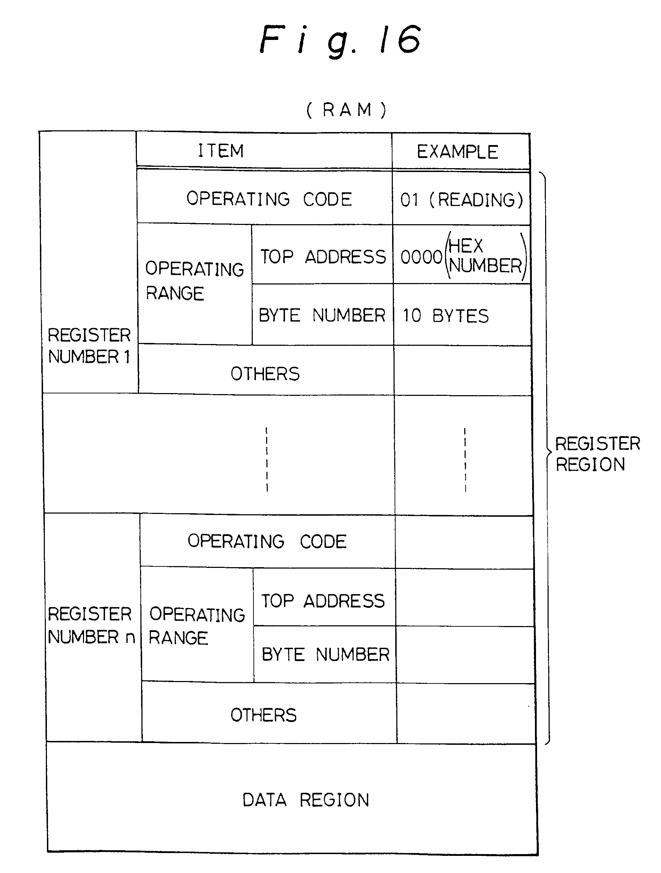

A reading operation of the moving body discriminator will next be explained with reference to Figs. 15 and 16 as one example in which data of 10 bytes are read from an address 0000(H) in a data region of the responder.

Before the responder is operated, an operating code 01 (as a reading code), a top address 0000(H) and a byte number 10 are registered to a region for a register number 1 of the responder. The operating code 01 (as reading), the top address 0000(H), the byte number 10 and the register number 1 of the responder are registered to the interrogator.

When the interrogator receives the register number 1 as an operating command from the data processor, the interrogator sets the register number 1 to a command ① for commanding an operation of the responder and transmits this command to the responder. When the responder has received this command ①, the responder reads operating contents set to the register number 1 of the command ①. These operating contents include that data of 10 bytes are read from the data address 0000(H). After the responder has read the data of 10 bytes from the data address 0000(H), the responder sets these data to a response ② and adds a code for detecting a transmission error to this response. Then, the responder transmits the response ② having this code to the interrogator.

When the interrogator has received this response ②, the interrogator checks a transmission error in the response ②. Thereafter, the interrogator knows from the register number of the response ② that the interrogator has received the data of 10 bytes from the data address 0000(H) of the responder. Then, the interrogator transfers these data to the data processor. When the data processor has received the data of 10 bytes as operating results from the data address 0000(H) of the responder, the reading operation of the moving body discriminator is terminated.

In the above embodiment, operating contents for giving commands from the data processor to the interrogator are registered to the interrogator and the responder in advance. A series of operations between the data processor, the interrogator and the responder is executed by a register number on a responder side. Thus, it is possible to reduce a processing time for checking the operating contents and a message length between the interrogator and the responder so that an operating time of the entire operating system can be reduced. Accordingly, the present invention can be applied to fields such as railway and traffic services in which high speed processings are required between the interrogator and the responder.

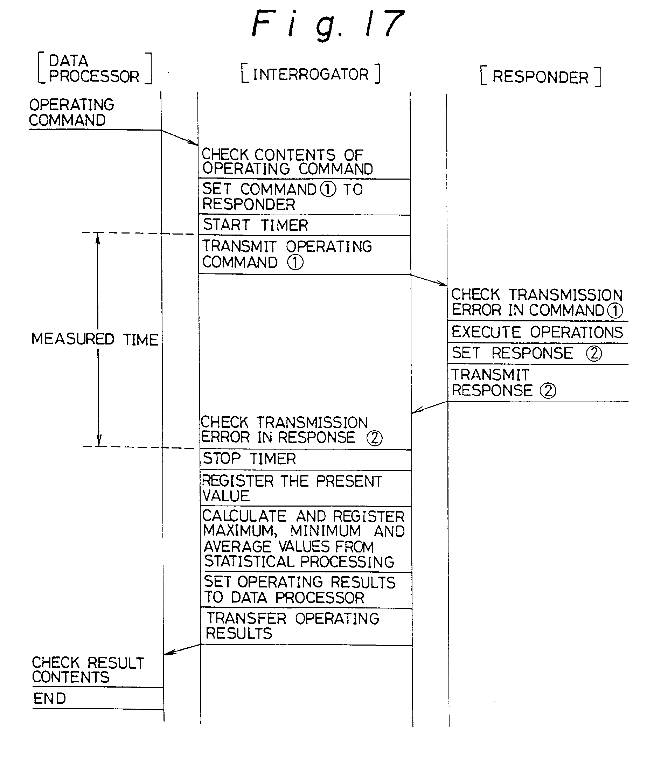

A moving body discriminator in accordance with a third embodiment of the present invention will next be explained with reference to Figs. 17 to 19.

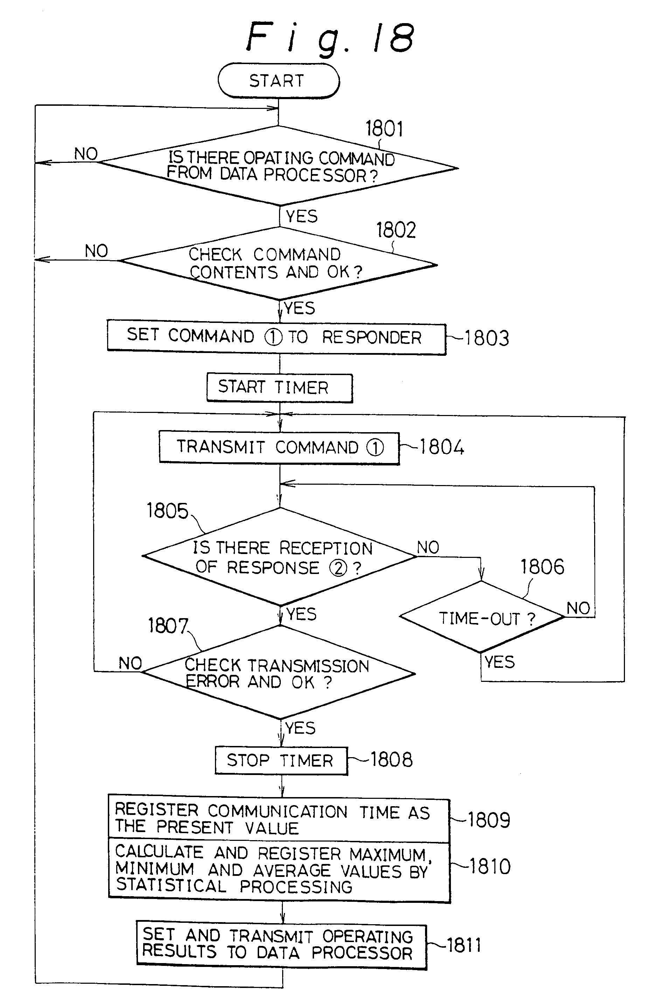

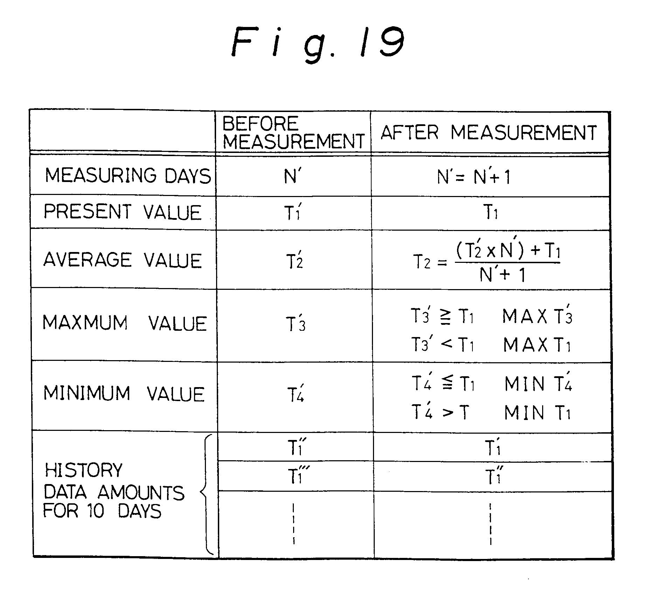

Fig. 19 will first be explained with reference to a flow chart shown in Fig. 18.

In a step 1801, it is judged whether there is an operating command from the data processor or not. When it is judged in the step 1801 that there is no operating command from the data processor, the interrogator attains a standby state until the interrogator receives an operating command. In contrast to this, when it is judged in the step 1801 that there is an operating command from the data processor, the interrogator checks contents of the operating command in a step 1802 and judges that these command contents are correct or not. When the command contents are not correct, it is returned to the above step 1801. In contrast to this, when the command contents are correct in the step 1802, a command ① is set to the responder in a step 1803 and the interrogator starts the timer and the command ① is transmitted in a step 1804.

In a step 1805, it is judged whether there is reception of a response ② or not. When it is judged in the step 1805 that there is no reception of the response ②, it is judged in a step 1806 whether it is time-out or not. When it is judged in the step 1806 that it is time-out, it is returned to the above step 1804. In contrast to this, when it is judged in the step 1806 that it is not time-out, it is returned to the above step 1805.

When it is judged in the step 1805 that there is reception of the response ②, the interrogator checks a transmission error in the response ② in a step 1807 and judges whether this response is correct or not. When it is judged in the step 1807 that there is a transmission error in the response ②, it is returned to the above step 1804. In contrast to this, when it is judged in the step 1807 that there is no transmission error in the response ②, the operation of a timer arranged in the interrogator is stopped in a step 1808 and a communication time is registered as the present value in a step 1809. A maximum value, a minimum value and an average value of the communication time are calculated and registered by statistical processing in a step 1810. In a step 1811, operating results for the data processor are set and transmitted.

As mentioned above, when the interrogator receives an operating command from the data processor, the interrogator starts the timer to measure a communication time T₁ between the interrogator and the responder. The interrogator then transmits the operating command ① to the responder. The responder executes its operation by receiving the operating command ①. After the operation of the responder has been executed, the responder transmits an operating response ② as a result to the interrogator. When the interrogator has received the operating response ②, the interrogator judges this response as completion of communication if there is no transmission error in the operating response ②. Thus, the interrogator stops the operation of the timer and reads the communication time T₁. The interrogator registers the communication time T₁ as the present value. As shown in Fig. 19, the interrogator calculates maximum, minimum and average values of the communication time. Further, the interrogator registers recent ten time amounts of historical data. Finally, data results are transferred from the interrogator onto a data processing side so that predetermined operations are terminated. The present value, the maximum, minimum and average values of the communication time, etc. are registered to a RAM of the interrogator. A backup of the RAM of the interrogator is provided by using a battery so as not to erase memory contents from the RAM. Otherwise, the RAM is constructed by using an EEPROM.

The data processor reads historical data including the maximum, minimum and average values and the present value of the communication time registered to a controller. The data processor compares this communication time with a target communication time for normally terminating communication without retrying any commands. Thus, the data processor investigates a communicating state and a communicating environment between the interrogator and the responder.

Accordingly, in the above embodiment, it is possible to measure a communication time until the interrogator receives a response of the responder after the interrogator has received the operating command from the data processor. The interrogator calculates maximum, minimum and average values of the measured communication time by statistical processing.

Data (the present time, the maximum, minimum and average values of the communication time) calculated by the communication time measurement and the statistical processing can be registered to the interrogator by its function at any time while the operating system is operated. When a user requires these data, an operating state of the operating system can be easily confirmed.

As a result, when necessary, the user can externally confirm the communication time only between the interrogator and the responder which does not include a processing time between the data processor and the interrogator. In this case, the user can confirm this communication time with the same accuracy without any burden of the user.

Accordingly, it is possible to confirm operating stability of the operating system from the present value, the maximum, minimum and average values of the communication time after a communicating equipment has been operated. Further, after the communicating equipment rises, it is effective to hold the operation of the communicating equipment and adjust the relation in position between antenna plates.

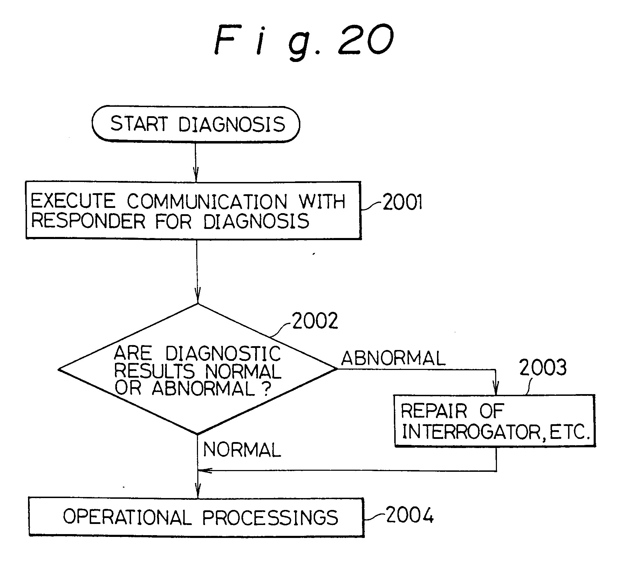

A moving body discriminator in accordance with a fourth embodiment of the present invention will next be explained with reference to Figs. 20 to 24.

Fig. 20 shows a diagnostic processing flow of an interrogator arranged in the moving body discriminator in the fourth embodiment.

In a first step 2001, communication between the interrogator and a responder for diagnosis is executed. In a step 2002, the interrogator judges whether diagnostic results are normal or not. When it is judged in the step 2002 that the diagnostic results are abnormal, the interrogator is repaired, etc. in a step 2003 and operating processings of the interrogator are performed in a step 2004. In contrast to this, when it is judged in the step 2002 that the diagnostic results are normal, it directly proceeds to the step 2004 and the operating processings of the interrogator are performed.

Namely, in the diagnostic processing flow shown in Fig. 20, it is not necessary to confirm existence and nonexistence of a responder for operations and arrange and remove the responder for diagnosis in comparison with diagnostic processings of the interrogator in the general technique.

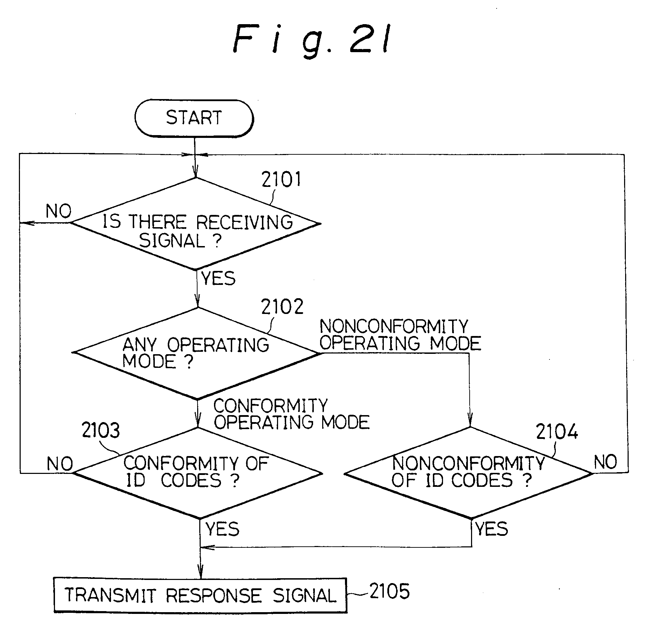

An operation of each of the responders for diagnosis and operations will next be explained with reference to a flow chart shown in Fig. 21.

In a first step 2101, it is judged whether there is a receiving signal or not. When it is judged in the step 2101 that there is no receiving signal, the responder attains a standby state until the responder receives a receiving signal. In contrast to this, when it is judged in the step 2101 that there is a receiving signal, an operating mode is judged in a step 2102. When it is judged in the step 2102 that the operating mode is a conformity operating mode, it is further judged in a step 2103 whether ID codes are in conformity with each other. When it is judged in the step 2103 that no ID codes are in conformity with each other, it is returned to the above step 2101. In contrast to this, when it is judged in the step 2103 that the ID codes are in conformity with each other, the responder transmits a response signal in a step 2105. When it is judged in the above step 2102 that the operating mode is a nonconformity operating mode, it is further judged in a step 2104 whether no ID codes are in conformity with each other. When it is judged in the step 2104 that the ID codes are in conformity with each other, it is returned to the above step 2101. In contrast to this, when it is judged in the step 2104 that no ID codes are in conformity with each other, it proceeds to the step 2105 and the responder transmits the response signal.

As shown by the flow chart in Fig. 21, when an operating mode designating code added to an operating command issued from the interrogator shows a "conformity time operation", the responder transmits a response when an ID code added to the operating command is in conformity with an ID code registered to the responder.

When the operating mode designating code added to the operating command issued from the interrogator shows a "nonconformity time operation", the responder transmits a response when no ID code added to the operating command is in conformity with the ID code registered to the responder.

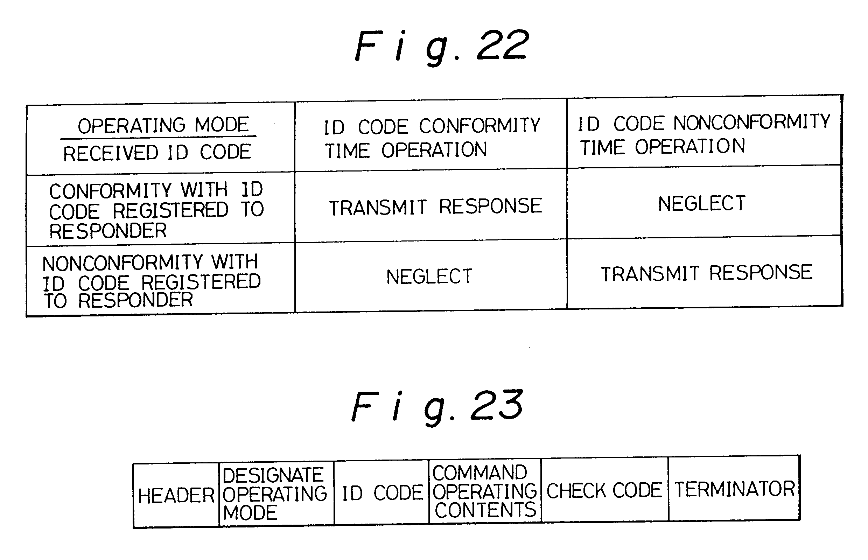

Fig. 22 shows existence and nonexistence of the response of the responder to the operating command from the interrogator every operating mode.

The ID code registered to the responder is recorded to a ROM and a RAM (a backup by a battery) built in the responder before the operating system is operated.

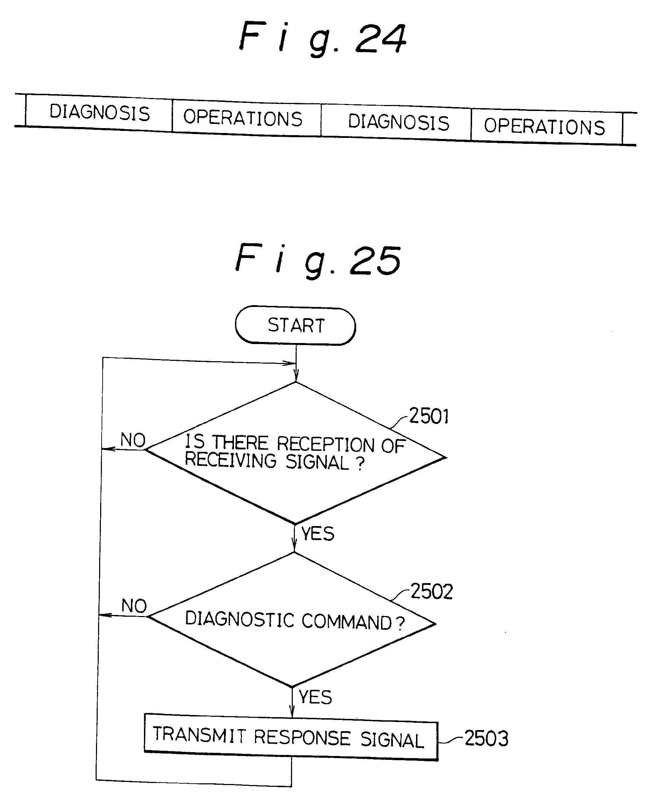

An operation of the interrogator will next be explained with reference to Figs. 23 and 24.

Fig. 23 shows one example of a message form of the operating command issued from the interrogator.

As shown in Fig. 23, an operating mode designating code and an ID code are added to this message. The operating mode designating code designates whether the responder is operated at a conformity or nonconformity time of ID codes.

A diagnostic operation of the interrogator is executed irrespective of existence and nonexistence of the responder for operations. However, it is necessary to consider that no problems are caused by the diagnostic execution in communication between the interrogator and the responder for operations as an original object of the operating system. When the responder for operations approaches a communication area of the interrogator during the diagnostic execution, it is necessary to secure original communication of the operating system between the interrogator and the responder for operations until the diagnostic operation is terminated. This problem can be solved by setting a period for issuing the operating command for diagnosis "after a constant time has passed after completion of communication between the interrogator and the responder for operations," "at a time point at which passage of an object attaching the responder for operations thereto by a photoelectric sensor, etc. is detected," etc.

As shown in Fig. 24, when a communication processing speed of the moving body discriminator is set to be sufficiently high with respect to a moving speed of the object attaching the responder for operations thereto, this problem can be also solved by a method for alternating issuing operating commands for diagnosis and operations.

Accordingly, in the above embodiment, the responder having a registered ID code determined for diagnosis is constantly arranged in the communication area of the interrogator. The interrogator issues an operating command adding a discriminating code thereto at an arbitrary time point while the operating system is operated. This discriminating code designates an operating mode in which the responder having an ID code conforming to the ID code determined for diagnosis transmits a response. Thus, it is possible to diagnose signal transmitting and receiving functions of the interrogator. As a result, no man is required for execution of the diagnostic operation so that danger can be avoided and economical efficiency of the moving body discriminator is improved. Further, the signal transmitting and receiving functions of the interrogator can be diagnosed at an arbitrary time point during the operation of the operating system. Accordingly, the diagnostic operation can be performed for a short period so that breakdown of the interrogator and existence of an obstacle can be rapidly detected.

A moving body discriminator in accordance with a fifth embodiment of the present invention will next be explained with reference to Fig. 20 used in the above fourth embodiment and Figs. 25 to 29.

Fig. 20 shows a diagnostic processing flow of an interrogator arranged in the moving body discriminator in the fifth embodiment. Contents of this diagnostic processing flow are already described above. Therefore, an explanation of these contents is omitted in the following description.

In this embodiment, it is not necessary to confirm existence and nonexistence of a responder for operations and arrange and remove a responder for diagnosis in comparison with diagnostic processings of the interrogator in the general technique.

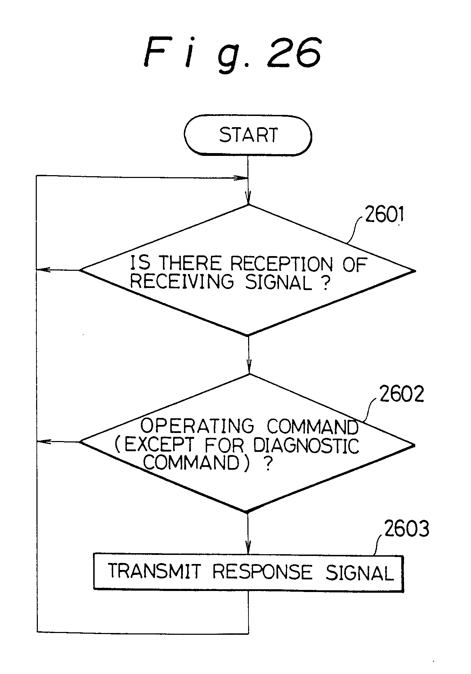

An operation of each of the responders in this fifth embodiment will next be explained with reference to Figs. 25 and 26.

Fig. 25 is a flow chart showing the operation of the responder for diagnosis.

In a first step 2501, it is judged whether there is a receiving signal or not. When it is judged in the step 2501 that there is no receiving signal, the responder attains a standby state until the responder receives a receiving signal. In contrast to this, when it is judged in the step 2501 that there is a receiving signal, the responder judges in a step 2502 whether it is a diagnostic command or not. When it is judged in the step 2502 that it is not a diagnostic command, it is returned to the above step 2501. In contrast to this, when it is judged in the step 2502 that it is a diagnostic command, the responder transmits a response signal in a step 2503.

As shown by the flow chart in Fig. 25, the responder transmits the response signal with respect to the diagnostic command issued from the interrogator, but does not transmit any response to various kinds of commands except for the diagnostic command.

Fig. 26 is a flow chart showing an operation of the responder for operations.

In a first step 2601, it is judged whether there is a receiving signal or not. When it is judged in the step 2601 that there is no receiving signal, the responder attains a standby state until the responder receives a receiving signal. In contrast to this, when it is judged in the step 2601 that there is a receiving signal, the responder judges in a step 2602 whether it is an operating command except for a diagnostic command. When it is judged in the step 2602 that it is not this operating command, it is returned to the above step 2601. In contrast to this, when it is judged in the step 2602 that it is the operating command, the responder transmits a response signal in a step 2603.

As shown by the flow chart in Fig. 26, the responder does not transmit any response signal with respect to the diagnostic command issued from the interrogator, but transmit a response to various kinds of commands except for the diagnostic command.

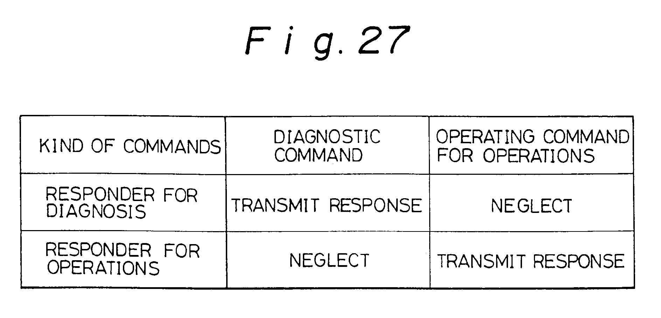

Fig. 27 shows existence and nonexistence of responses of the above two kinds of responders with respect to commands from the interrogator.

The responders for operations and diagnosis may be separately designed. Otherwise, these responders can be made by the same design and can be set in fields by a method for registering discriminating codes for operations and diagnosis to a ROM and a RAM (a backup by a battery) built in the responders.

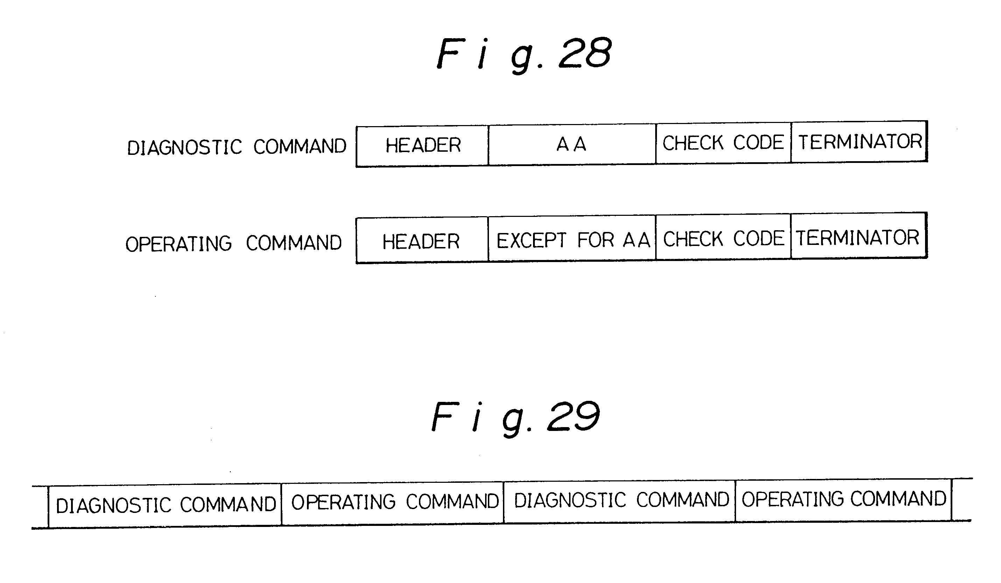

Fig. 28 shows one example of message forms of a diagnostic command issued from the interrogator and various kinds of commands except for the diagnostic command.

The diagnostic command is issued from the interrogator irrespective of existence and nonexistence of the responder for operations. However, it is necessary to consider that no problems are caused by executing a diagnostic operation in communication between the interrogator and the responder for operations as an original object of the operating system. When the responder for operations approaches a communication area of the interrogator during the diagnostic execution, it is necessary to secure original communication of the operating system between the interrogator and the responder for operations until the diagnostic operation is terminated. This problem can be solved by setting a period for issuing the diagnostic command "after a constant time has passed after completion of communication between the interrogator and the responder for operations," "at a time point at which passage of an object attaching the responder for operations thereto by a photoelectric sensor, etc. is detected," etc.

As shown in Fig. 29, when a communication processing speed of the moving body discriminator is set to be sufficiently high with respect to a moving speed of the object attaching the responder for operations thereto, this problem can be also solved by a method for alternating issuing the diagnostic command and various kinds of commands.

Accordingly, in the above embodiment, the responder responsive to only the diagnostic command is constantly arranged in the communication area of the interrogator. The interrogator issues the diagnostic command at an arbitrary time point while the operating system is operated. Thus, it is possible to diagnose signal transmitting and receiving functions of the interrogator. As a result, no man is required for execution of the diagnostic operation so that danger can be avoided and economical efficiency of the moving body discriminator is improved. Further, the signal transmitting and receiving functions of the interrogator can be diagnosed at an arbitrary time point during the operation of the operating system. Accordingly, the diagnostic operation can be performed for a short period so that breakdown of the interrogator and existence of an obstacle can be rapidly detected.

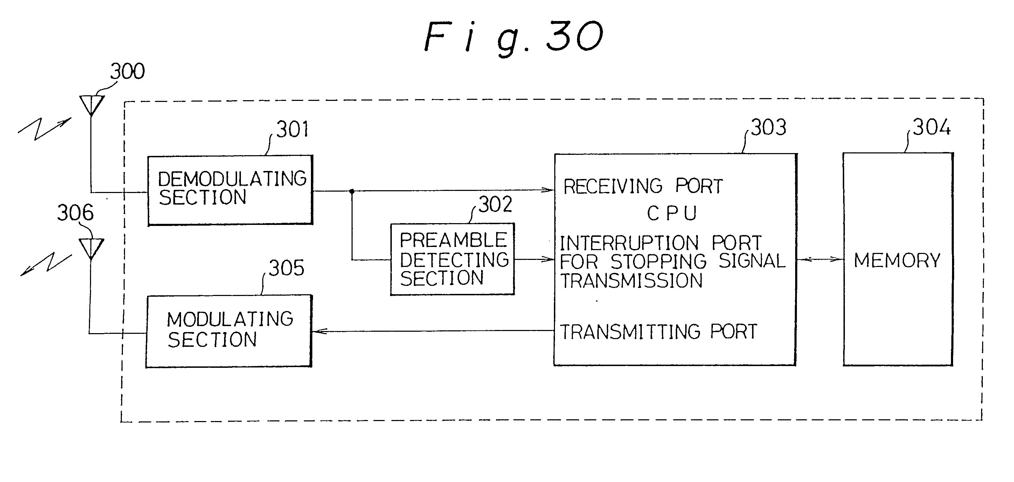

Fig. 30 is a block diagram showing the circuit construction of a circuit plate as a main portion of a moving body discriminator in accordance with a sixth embodiment of the present invention.

In Fig. 30, the circuit plate is constructed by an antenna 300 for receiving a signal, a demodulating section 301, a preamble detecting section 302, a central processing unit (CPU) 303, a memory 304, a modulating section 305 and a transmitting antenna 306. The demodulating section 301 is connected to the antenna 300 for receiving a signal and demodulates the signal received by this antenna 300. The preamble detecting section 302 is connected to the demodulating section 301 and detects a preamble of a signal demodulated by the demodulating section 301. The central processing unit (CPU) 303 is connected to the demodulating section 301 and the preamble detecting section 302. Signals outputted from the demodulating section 301 and the preamble detecting section 302 are inputted to the central processing unit 303. The central processing unit 303 controls outputs of these signals. The memory 304 is connected to the CPU 303 and stores a signal outputted from the CPU 303. The modulating section 305 is connected to the CPU 303 and modulates a signal outputted from the CPU 303. The transmitting antenna 306 is connected to the modulating section 305 and transmits a signal modulated by the modulating section 305.

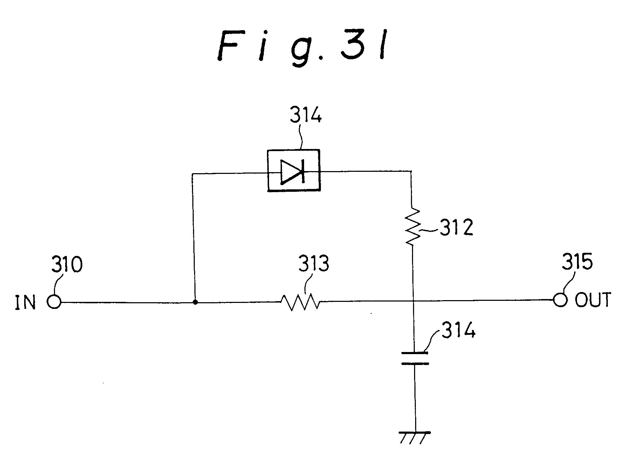

Fig. 31 is a circuit diagram showing one constructional example of the above preamble detecting section 302.

The preamble detecting section 302 shown in Fig. 31 is constructed by an input terminal (IN) 310, a diode 311, a resistor (R) 313, a resistor (R) 312, a capacitor (C) 314 and an output terminal (OUT) 315. An input terminal of the diode 311 is connected to the input terminal (IN) 310. One end of the resistor (R) 313 is connected to the input terminal (IN) 310. One end of the resistor (R) 312 is connected to an output terminal of the diode 311. One end of the capacitor (C) 314 is connected to the other ends of the resistors 312 and 313. The other end of the capacitor 314 is connected to the ground. The output terminal (OUT) 315 is connected to the other ends of the resistors 312 and 313 and one end of the capacitor 314.

An operation of the circuit plate shown in Fig. 30 will next be explained.

A mark for stopping signal transmission is transmitted from the antenna 300 for receiving a signal. This mark is inputted to a signal receiving port of the CPU 303 as a serial input port and the preamble detecting section 302 as a mark detecting section through the demodulating section 301. When the circuit plate is transmitting a signal, this mark inputted to the signal receiving port of the CPU 303 is neglected. In contrast to this, the mark inputted to the preamble detecting section 302 is transmitted to an interruption port of the CPU 303 for stopping signal transmission by capacitor-resistor (CR) discharge of the preamble detecting section 302. The CPU 303 stops transmission of a response by receiving this mark as an interruption and an operating state of the CPU 303 is changed to a standby state in which the CPU 303 can receive a signal.

The receiving antenna 300 receives data from the circuit plate, but a receiving state of the receiving antenna 300 is switched to a mark transmitting state for transmitting the mark at a stage at which abnormality is found in these data. The mark is received by the circuit plate with the above-mentioned contents so that transmission of the response is stopped.

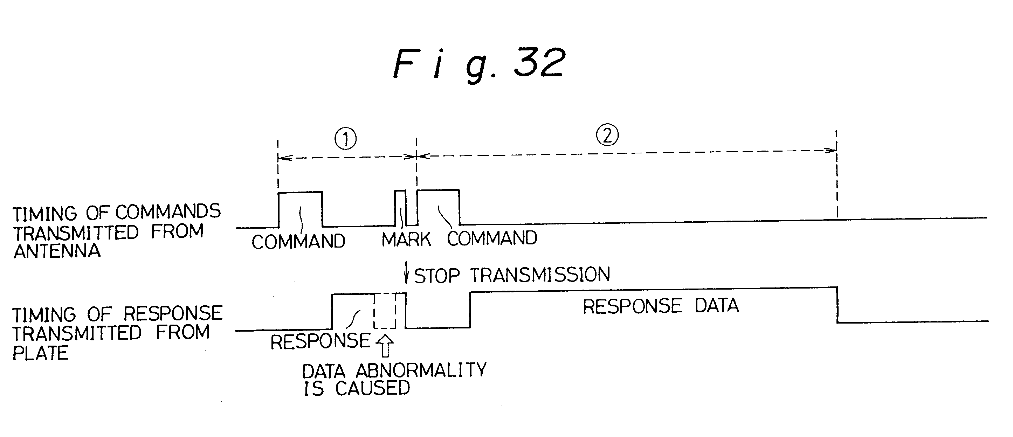

These communicating procedures are controlled by software of a controller connected to the antenna. Fig. 32 shows a chart of communicating operations as one example of this control.

In Fig. 32, reference numeral ① shows that signal transmission of the circuit plate is stopped by the mark since abnormality is caused in a first communication. Reference numeral ② shows that the circuit plate is immediately retried. Fig. 32 shows an example in which the circuit plate is retried at a high speed by a time T as a time-out waiting time on an antenna side.

In this embodiment, when the antenna transmits the mark for stopping signal transmission, the circuit plate detects this mark by hardware and this mark is processed by the CPU within the circuit plate.

When the circuit plate transmits data, the antenna transmits a carrier called an unmodulated wave. The circuit plate performs a reflecting type modulation in which this carrier is modulated by data and is reflected.

The above circuit plate can immediately transmit a resending requirement command at a stage at which the circuit plate judges that response data received by the antenna are abnormal. Namely, the circuit plate is constructed such that a pseudo-full duplex transmission system is executed on a half duplex channel.

Accordingly, in the above embodiment, when the circuit plate is transmitting the response data and abnormality is found in data received by the antenna, the signal transmission of the circuit plate is immediately stopped and the circuit plate can be retried so that a retrying period can be shortened. Namely, the circuit plate can be retried without causing any time loss when abnormality is found in the response data from the circuit plate. This construction can be also applied to an object moving at a high speed. Further, when the moving body discriminator communicates with a moving body, the operating system is constructed in consideration of a worst situation such that the circuit plate can be sufficiently retried plural times. Accordingly, when a retrying time is shortened, a communicable moving speed of the moving body is increased as a result. Further, a packet length of the response data can be increased in comparison with the general case. This is because the circuit plate can be retried at a stage at which abnormality is found in the response data from the circuit plate even when the response data are long.

The above moving body discriminator in the present invention can be used in all operating systems using the moving body discriminator. In particular, the moving body discriminator of the present invention can be effectively used in an operating system in which serious troubles are caused in operations of this operating system when communication between the interrogator and the responder is disabled by breakdown of the interrogator and an obstacle obstructing spatial transmission within a communication area. The moving body discriminator of the present invention can be also effectively used particularly in an operating system using a general dangerous diagnostic method since a diagnostic operation is manually operated in this method. The operating system is constructed by a toll road charge collecting system, a commutation-ticket automatic examining system and a vehicle operating control system as examples. Further, the present invention can be effectively applied to an operating system in which a communication time is short. Such an operating system is constructed by a train discriminating system, a toll road charge collecting system, a product line system for a short tact time, a door entrance-exit control system, a skiing ground lift riding system, a precincts finding-out follow-up system, etc. as examples. In these systems, a plurality of question antennas are arranged such that the question antennas are adjacent to each other.

In the present invention, the moving body discriminator is used irrespective of a spatial transmitting medium. Namely, the moving body discriminator in the present invention can be applied to all discriminating and communicating devices of a moving body in which vibrational energies of "radio waves such as a millimeter wave, a microwave, a medium wave, a long wave, etc.", "electromagnetic coupling utilizing mutual induction of a coil", "light such as a visible ray, an infrared ray, etc." are utilized as a communication medium.

As mentioned above, in the present invention, a moving body discriminator comprises data processing means for outputting a communication command; a plurality of control means each connected to the data processing means and inputting the communication command outputted from the data processing means and outputting a predetermined instruction; a plurality of antennas connected and corresponding to the plural control means and inputting and outputting the predetermined instruction outputted from each of the corresponding control means; and responding means for inputting the predetermined instruction by spatial transmission and outputting a specified signal to an antenna outputting the predetermined instruction; the plural control means controlling operations of the plural antennas such that the plural control means sequentially operate the plural antennas in a predetermined order to communicate with the responding means. Accordingly, connection between the data processing means and the plural control means can be simplified. A processing burden of the data processing means can be reduced. Further, a token cyclic period of the antennas can be shortened. As a result, generating probability of undetection of a token is reduced when the responding means is moved at a high speed.

In the moving body discriminator, the data processing means registers operating contents commanded to the antennas to the antennas and the responding means in advance. A series of operations between the data processing means, the antennas and the responding means is executed by a register number on a side of the responding means. Accordingly, it is possible to reduce a processing time for checking the operating contents and a message length between each of the antennas and the responding means. As a result, an entire operating time of the operating system can be shortened.

In the moving body discriminator, each of the antennas measures a communication time from reception of an operating command from the data processing means to reception of a response from the responding means. Each of the antennas statistically processes maximum, minimum and average values of the measured communication time. Each of the antennas records the present, maximum, minimum and average values of the communication time calculated in its measurement and statistical processing and confirms an operating state of an operating system. Accordingly, operating stability of the operating system can be confirmed from the present, maximum, minimum and average values of the communication time after a communicating equipment is operated.

In the moving body discriminator, the responding means registering an ID code determined for diagnosis thereto is constantly arranged in a communication area of the antennas. Each of the antennas issues an operating command adding a discriminating code thereto at an arbitrary time point during the operation of an operating system so as to diagnose signal transmitting and receiving functions of each of the antennas. The discriminating code designates an operating mode in which the responding means having an ID code conforming to the ID code determined for diagnosis transmits a response. Accordingly, no man is required for execution of the diagnostic operation and the diagnostic operation can be performed at an arbitrary time point during the operation of the operating system. Further, the diagnostic operation can be performed for a short period.

In the moving body discriminator, the responding means responsive to only a diagnostic command is constantly arranged in a communication area of the antennas. Each of the antennas issues the diagnostic command at an arbitrary time point during the operation of an operating system so as to diagnose signal transmitting and receiving functions of each of the antennas. Accordingly, no man is required for execution of the diagnostic operation and the diagnostic operation can be performed at an arbitrary time point during the operation of the operating system. Further, the diagnostic operation can be performed for a short period.

In the moving body discriminator, the moving body discriminator further comprises a circuit plate constructed such that the circuit plate transmits a resending requirement command when it is judged that response data received by each of the antennas are abnormal. Accordingly, when the circuit plate is transmitting the response data and abnormality is found in data received by each of the antennas, the data transmission of the circuit plate is immediately stopped and the circuit plate can be retried. As a result, the circuit plate can be retried without causing any time loss when abnormality is found in the response data from the circuit plate.

## Claims

1. A moving body discriminator for discriminating the movement of a moving body, comprising
data processing means (100) arranged to output a communication command onto a serial token bus system;
a plurality of control means (101-10N), each of which is connected to said data processing means (100) through said serial token bus system and arranged to input said communication command from said data processing means when designated and to subsequently output a predetermined instruction;
a plurality of antennas (111-11N), each of which is connected to a corresponding one of said plurality of control means (101-10N) and arranged to input said predetermined instruction from said corresponding one of said plurality of control means and to subsequently output the same for spatial transmission; and
responding means (120) provided with the moving body to be discriminated and arranged to input said predetermined instruction received from one of said antennas by spatial transmission and to subsequently output a response signal to said one of said antennas which has output said predetermined instruction;
**characterized in that**
said plurality of control means (101-10N) is arranged to sequentially operate said plurality of antennas (111-11N) in a predetermined order so as to communicate with said responding means (120); and
each of said antennas (111-11N) is arranged to measure a communication time from reception of an instruction from said corresponding one of said plurality of control means to reception of said response signal from said responding means (120), to statistically process maximum, minimum and average values of said measured communication time, to record said present, maximum, minimum and average values, and, based thereon, to confirm an operating state of an application operating system in which the movement of a moving body is to be discriminated.

2. A moving body discriminator according to claim 1, wherein said data processing means (100) is arranged to register operating contents commanded to said antennas (111-11N) and said responding means (120) in advance; and a series of operations between the data processing means (100), the antennas (111-11N) and the responding means (120) is executed by a register number on the side of the responding means (120).

3. A moving body discriminator according to claim 1, wherein said responding means (120) is arranged to register an ID code determined for diagnosis and is constantly located in a communication area of said antennas (111-11N); each of said antennas (111-11N) is arranged to issue a command adding a discriminating code thereto at an arbitrary time point during the operation of said operating system so as to diagnose signal transmitting and receiving functions of each of the antennas (111-11N); and the discriminating code is arranged to designate an operating mode in which the responding means (120) having an ID code conforming to said ID code determined for diagnosis transmits a response.

4. A moving body discriminator according to claim 1, wherein said responding means (120) is arranged to be responsive to only a diagnostic command and is constantly located in a communication area of said antennas (III-IIN); and each of said antennas (111-11N) is arranged to issue said diagnostic command at an arbitrary time point during the operation of said operating system so as to diagnose signal transmitting and receiving functions of each of said antennas (111-11N).

5. A moving body discriminator according to claim 1, further comprising a circuit plate constructed such that the circuit plate transmits a resending requirement command when it is judged that response data received by each of said antennas (111-11N) are abnormal.

## Patentansprüche

1. Erkennungsvorrichtung für sich bewegende Körper zum Erkennen der Bewegung eines sich bewegenden Körpers, mit:
- einer Datenverarbeitungseinrichtung (100), die so ausgebildet ist, dass sie auf einem seriellen Tokenbus-System einen Kommunikationsbefehl ausgibt;
- einer Anzahl von Steuerungseinrichtungen (101 - 10N), von denen jede über das serielle Tokenbus-System mit der Datenverarbeitungseinrichtung (100) verbunden ist, und so ausgebildet ist, dass sie den Kommunikationsbefehl von der Datenverarbeitungseinrichtung aufnimmt, wenn sie spezifiziert ist, und sie anschließend eine vorbestimmte Anweisung ausgibt;
- einer Anzahl von Antennen (111 - 11N), von denen jede mit einer entsprechenden der Anzahl von Steuerungseinrichtungen (101- 10N) verbunden ist und so ausgebildet ist, dass sie die vorbestimmte Anweisung von der entsprechenden der Anzahl von Steuerungseinrichtungen aufnimmt und anschließend dieselbe zur räumlichen Übertragung ausgibt; und
- einer Antworteinrichtung (120), die am zu erkennenden sich bewegenden Körper vorhanden ist und so ausgebildet ist, dass sie die vorbestimmte Anweisung aufnimmt, die von einer der Antennen durch räumliche Übertragung empfangen wurde, und anschließend ein Antwortsignal an diejenige der Antennen ausgibt, die die vorbestimmte Anweisung ausgegeben hat;
**dadurch gekennzeichnet**, dass
- die Anzahl von Steuerungseinrichtungen (101 - 10N) so ausgebildet ist, dass sie die Anzahl von Antennen (111 - 11N) in vorbestimmter Reihenfolge sequenziell betreiben, um mit der Antworteinrichtung (120) zu kommunizieren; und
- jede der Antennen (111 - 11N) so ausgebildet ist, dass sie die Kommunikationszeit ab dem Empfang einer Anweisung von der entsprechenden der Anzahl von Steuerungseinrichtungen bis zum Empfang des Antwortsignals von der Antworteinrichtung (120) misst, um den maximalen, minimalen und mittleren Wert der gemessenen Kommunikationszeit statistisch zu verarbeiten, den aktuellen, maximalen, minimalen und mittleren Wert aufzuzeichnen und, darauf beruhend, den Betriebszustand eines Anwendungsbetriebssystems klarzustellen, in dem die Bewegung eines sich bewegenden Körpers zu erkennen ist.

2. Erkennungsvorrichtung für sich bewegende Körper nach Anspruch 1, bei der die Datenverarbeitungseinrichtung (100) so ausgebildet ist, dass sie für die Antennen (111 - 11N) und die Antworteinrichtung (120) angewiesene Betriebsinhalte vorab registriert und eine Reihe von Betriebsabläufen zwischen der Datenverarbeitungseinrichtung (100), den Antennen (111 - 11N) und der Antworteinrichtung (120) mittels einer Registernummer seitens der Antworteinrichtung (120) ausgeführt wird.

3. Erkennungsvorrichtung für sich bewegende Körper nach Anspruch 1, bei der die Antworteinrichtung (120) so ausgebildet ist, dass sie einen zur Diagnose bestimmten ID-Code registriert, und sie dauernd in einem Kommunikationsgebiet der Antennen (111 - 11N) liegt; wobei jede der Antennen (111 -11N) so ausgebildet ist, dass sie einen Befehl mit hinzugefügtem Erkennungscode zu einem beliebigen Zeitpunkt während des Betriebs des Betriebssystems ausgibt, um Signalsende-und -empfangsfunktionen jeder der Antennen zu diagnostizieren; und wobei der Erkennungscode so ausgebildet ist, dass er einen Betriebsmodus spezifiziert, in dem die Antworteinrichtung (120) mit einem ID-Code entsprechend dem zur Diagnose bestimmten ID-Code eine Antwort sendet.

4. Erkennungsvorrichtung für sich bewegende Körper nach Anspruch 1, bei der die Antworteinrichtung (120) so ausgebildet ist, dass sie nur auf einen Diagnosebefehl reagiert, und sie dauernd in einem Kommunikationsgebiet der Antennen (111 - 11N) liegt; und jede der Antennen (III - IIN) so ausgebildet ist, dass sie den Diagnosebefehl zu einem beliebigen Zeitpunkt während des Betriebs des Betriebssystems ausgibt, um Signalsende- und -empfangsfunktionen jeder der Antennen (111 - 11N) zu diagnostizieren.

5. Erkennungsvorrichtung für sich bewegende Körper nach Anspruch 1, ferner mit einer Schaltungsplatte, die so aufgebaut ist, dass sie einen Neusendeerfordernis-Befehl sendet, wenn erkannt wird, dass die von jeder der Antennen (111 - 11N) empfangenen Antwortdaten anormal sind.

## Revendications

1. Dispositif de discrimination pour corps en mouvement destiné à assurer la discrimination du mouvement d'un corps en mouvement, comportant :
un moyen de traitement de données (100) agencé pour délivrer une commande de communication sur un système de bus à jeton série ;
une multiplicité de moyens de commande (101 à 10N), dont chacun est relié audit moyen de traitement de données (100), par l'intermédiaire dudit système de bus à jeton série, et agencé de façon à introduire ladite commande de communication en provenance dudit moyen de traitement de données, lors de sa désignation, et à délivrer ensuite une instruction prédéterminée ;
une multiplicité d'antennes (111 à 11N), dont chacune est reliée à un moyen correspondant de ladite multiplicité de moyens de commande (101 à 10N) et agencé de façon à introduire ladite instruction prédéterminée en provenance dudit moyen correspondant de ladite multiplicité de moyens de commande et à délivrer celle-ci ensuite en vue de sa transmission dans l'espace ; et
un moyen répondeur (120) doté du corps en mouvement devant faire l'objet de la discrimination et agencé de façon à introduire ladite instruction prédéterminée reçue de l'une desdites antennes par transmission dans l'espace et à délivrer ensuite un signal de réponse à destination de ladite antenne qui a délivré ladite instruction prédéterminée;
caractérisé en ce que
ladite multiplicité de moyens de commande (101 à 10N) est agencée de façon à faire fonctionner de manière séquentielle ladite multiplicité d'antennes (111 à 11N) selon un ordre prédéterminé afin de communiquer avec ledit moyen répondeur (120) ; et
chacune desdites antennes (111 à 11N) est agencée de façon à mesurer un temps de communication s'écoulant depuis la réception d'une instruction en provenance dudit moyen correspondant de ladite multiplicité de moyens de commande jusqu'à la réception dudit signal de réponse en provenance dudit moyen répondeur (120), à assurer un traitement statistique de valeurs maximale, minimale et moyenne dudit temps de communication mesuré, à enregistrer lesdites valeurs maximale, minimale et moyenne actuelles et, sur la base de celles-ci, à confirmer un état de fonctionnement d'un système d'exploitation d'application dans lequel le mouvement d'un corps en mouvement doit faire l'objet d'une discrimination.

2. Dispositif de discrimination pour corps en mouvement selon la revendication 1, dans lequel ledit moyen de traitement de données (100) est agencé de façon à enregistrer un contenu d'opération faisant l'objet d'une commande au niveau desdites antennes (111 à 11N) et dudit moyen répondeur (120) à l'avance ; et une série d'opérations se déroulant entre le moyen de traitement de données (100), les antennes (111 à 11N) et le moyen répondeur (120) est exécutée par numéro de registre du côté du moyen répondeur (120).

3. Dispositif de discrimination pour corps en mouvement selon la revendication 1, dans lequel ledit moyen répondeur (120) est agencé de façon à enregistrer un code d'identification ID déterminé aux fins de diagnostic et est localisé constamment dans une zone de communication desdites antennes (111 à 11N) ; chacune desdites antennes (111 à 11N) est agencée de façon à émettre une commande y ajoutant un code de discrimination en un point arbitraire dans le temps au cours du fonctionnement dudit système d'exploitation afin de diagnostiquer des fonctions d'émission et de réception de signaux de chacune des antennes (111 à 11N) ; et le code de discrimination est agencé de façon à désigner un mode de fonctionnement suivant lequel le moyen répondeur (120) ayant un code ID conforme audit code ID déterminé aux fins de diagnostic émet une réponse.

4. Dispositif de discrimination pour corps en mouvement selon la revendication 1, dans lequel ledit moyen répondeur (120) est agencé de façon à ne répondre qu'à une commande de diagnostic et est localisé constamment dans une zone de communication desdites antennes (111 à 11N) ; et chacune desdits antennes (111 à 11N) est agencée de façon à émettre ladite commande de diagnostic en un point arbitraire dans le temps au cours du fonctionnement dudit système d'exploitation afin de diagnostiquer des fonctions d'émission et de réception de signaux de chacune desdites antennes (111 à 11N).

5. Dispositif de discrimination pour corps en mouvement selon la revendication 1, comportant, en outre, une carte de circuits réalisée de telle sorte qu'elle envoie une commande d'exigence de retransmission lorsqu'il est jugé que des données de réponse reçues par chacune desdites antennes (111 à 11N) sont anormales.
